(19) Europäisches Patentamt
European Patent Office
Office européen des brevets

(11) **EP 4 657 135 A1**

(12) **EUROPEAN PATENT APPLICATION**
published in accordance with Art. 153(4) EPC

(43) Date of publication:
**03.12.2025   Bulletin 2025/49**

(21) Application number: **23922917.2**

(22) Date of filing: **11.12.2023**

(51) International Patent Classification (IPC):
*G02B 21/36* (2006.01)        *G01N 21/17* (2006.01)
*G01N 21/45* (2006.01)        *G02B 21/06* (2006.01)

(52) Cooperative Patent Classification (CPC):
G01N 21/17; G01N 21/45; G02B 21/06;
G02B 21/36

(86) International application number:
**PCT/JP2023/044311**

(87) International publication number:
**WO 2024/171584 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2023   JP 2023023360**

(71) Applicant: **Hamamatsu Photonics K.K.
Hamamatsu-shi, Shizuoka 435-8558 (JP)**

(72) Inventors:
• **YASUHIKO, Osamu
Hamamatsu-shi, Shizuoka 435-8558 (JP)**
• **TAKEUCHI, Kozo
Hamamatsu-shi, Shizuoka 435-8558 (JP)**
• **YAMADA, Hidenao
Hamamatsu-shi, Shizuoka 435-8558 (JP)**

(74) Representative: **Hoffmann Eitle
Patent- und Rechtsanwälte PartmbB
Arabellastraße 30
81925 München (DE)**

(54) **OBSERVATION DEVICE AND OBSERVATION METHOD**

(57)    An observation apparatus 1A includes a light source 10, an irradiation unit 31, an imaging unit 50, and a processing unit 60. The irradiation unit 31 inputs spatially coherent light output from the light source 10, generates first light and second light from the input light, and irradiates an observation object S with the first light and the second light in an overlapping manner. The irradiation unit 31 irradiates the observation object S with the first light along a fixed light irradiation direction, and irradiates the observation object S with the second light along each of a plurality of light irradiation directions. The imaging unit 50 receives both the first light and the second light, and captures an interference intensity image on each of a plurality of focal planes. The processing unit 60 performs required processing based on the interference intensity image to generate a complex amplitude image and the like. Thus, an observation apparatus capable of reducing influence of multiple scattered light and easily observing an observation object even in the case in which the observation object is a multiple scattering object is realized.

**Fig.1**

## Description

### Technical Field

The present disclosure relates to an observation apparatus and an observation method.

### Background Art

In recent years, a technique for producing a three-dimensional cell tissue called a spheroid or an organoid has been developed. Further, a study for applying the above three-dimensional cell tissues to drug development, regenerative medicine, and the like has been developed. The above three-dimensional cell tissue is an optically transparent multiple scattering object. As a technique for imaging the optically transparent scattering object, various methods have been proposed.

In these techniques, examples of an imaging technique using a fluorescent probe include a confocal microscope, a multiphoton microscope, and a light sheet microscope. In addition, as a non-staining and non-invasive imaging technique without using the fluorescent probe, optical coherence tomography (OCT) or the like is known.

The non-staining and non-invasive imaging is often desired for an observation object such as the spheroid or the organoid, however, there are not many reports in which the OCT has been applied to the imaging of the above observation object. The reason may be that a resolution of the imaging by the OCT is low, and it is difficult to interpret a signal obtained by the imaging by the OCT. Therefore, it can be said that the non-staining imaging technique for the three-dimensional cell tissue which can be a gold standard has not been established at the present stage.

A quantitative phase imaging (QPI) is also known as a technique capable of imaging an optical path length of the observation object in a non-staining and non-invasive manner. The QPI can acquire physical information such as the optical path length of the observation object (for example, a cell), and thus, application of the QPI is progressing in a biological field. Images acquired by the QPI can be used to generate other types of images, such as a differential interference image and a phase contrast microscope image.

The QPI is a technique capable of acquiring an image having a relatively large amount of information, and is expected to be applicable to a higher content analysis than a conventional analysis using a bright field image. Further, the high content analysis using the non-staining imaging technique has been actively studied due to improvement in image recognition accuracy by machine learning in recent years, and the non-staining imaging of the multiple scattering object is expected to play an important role in the future. However, the QPI cannot grasp a true three-dimensional structure because the acquired image is merely a two-dimensional projection of the optical path length.

Further, optical diffraction tomography (ODT) described in Patent Document 1 is also known as a technique capable of imaging the optical path length of the observation object in a non-staining and non-invasive manner. The ODT is a development of the QPI into a technique capable of three-dimensional imaging, and can realize three-dimensional refractive index tomography of the observation object.

Performing cell observation using the ODT enables identification of organelles such as cell nuclei and mitochondria, and further, enables tracking of three-dimensional structural changes, and is expected to enable higher content analysis than the QPI. Further, a technique described in Patent Document 2 can also realize the three-dimensional refractive index tomography of the observation object.

### Citation List

#### Patent Literature

Patent Document 1: Japanese Patent Application Laid-Open Publication No. 2017-219826
Patent Document 2: US Patent No. 10215697

### Summary of Invention

#### Technical Problem

In the conventional techniques including the techniques described in Patent Documents 1 and 2, light output from a light source is split into two light beams, one split light passed through the observation object is set as object light, the other split light without passing through the observation object is set as reference light, and an interference intensity image generated by interference between the object light and the reference light is captured by an imaging unit. In addition, by performing required operation based on the interference intensity image, a complex amplitude image can be generated, and further, a three-dimensional refractive index distribution image of the observation object can be generated.

In the conventional two beam interference method, the reference light having a known wavefront (a plane wave) without passing through the observation object is used, and the object light and the reference light are made to interfere with each other by using an interferometer to acquire the interference intensity image, and thus, it is possible to accurately obtain a complex amplitude (an amplitude and a phase) of the object light.

However, in the conventional two beam interference method, it is necessary to use a laser light source for outputting light of a single frequency having a long coherence length in order to cause the object light and the reference light, which reach an imaging unit through paths which are significantly different from each other, to efficiently interfere with each other. In order to cause the object light and the reference light to efficiently interfere with each other, it is necessary to make an optical path difference between the two light beams as short as possible before reaching the imaging unit, and in addition, adjustment of the optical system of the observation apparatus is not easy, and when the optical path difference changes due to factors such as environmental variation and the like, an interference signal also changes, and thus, there is a lack of stability.

An object of an embodiment is to provide an observation apparatus and an observation method capable of easily observing an observation object while reducing influence of multiple scattered light even in the case in which the observation object is a multiple scattering object.

## Solution to Problem

An embodiment is an observation apparatus. The observation apparatus includes (1) an initial image generation unit for generating a complex amplitude image of light on each of a plurality of focal planes when an observation object is irradiated with light along each of a plurality of light irradiation directions; and (2) an image update unit for updating, for each of the plurality of light irradiation directions, based on the complex amplitude image representing a wavefront of light obtained when a wavefront of light represented by the complex amplitude image on an arbitrary focal plane out of the plurality of focal planes is propagated to another focal plane, the complex amplitude image on the another focal plane, and (3) the image update unit repeatedly performs an update process, for each of the plurality of light irradiation directions and each of the plurality of focal planes, by using the complex amplitude image generated by the initial image generation unit as an initial image.

An embodiment is an observation method. The observation method includes (1) an initial image generation step of generating a complex amplitude image of light on each of a plurality of focal planes when an observation object is irradiated with light along each of a plurality of light irradiation directions; and (2) an image update step of updating, for each of the plurality of light irradiation directions, based on the complex amplitude image representing a wavefront of light obtained when a wavefront of light represented by the complex amplitude image on an arbitrary focal plane out of the plurality of focal planes is propagated to another focal plane, the complex amplitude image on the another focal plane, and (3) in the image update step, an update process is repeatedly performed, for each of the plurality of light irradiation directions and each of the plurality of focal planes, by using the complex amplitude image generated in the initial image generation step as an initial image.

An embodiment is a program. The program is a program for causing a computer to execute the respective steps of the observation method of the above configuration.

An embodiment is a recording medium. The recording medium is a computer readable recording medium storing the program of the above configuration.

## Advantageous Effects of Invention

According to the observation apparatus and the observation method of the embodiments, it is possible to reduce influence of multiple scattered light and easily observe an observation object even in the case in which the observation object is a multiple scattering object.

## Brief Description of Drawings

[FIG. 1] FIG. 1 is a diagram illustrating a configuration of an observation apparatus 1A.
[FIG. 2] FIG. 2 is a diagram illustrating a configuration of an observation apparatus 1B.
[FIG. 3] FIG. 3 is a diagram illustrating a configuration of an observation apparatus 1C.
[FIG. 4] FIG. 4 is a diagram illustrating a configuration of an observation apparatus 1D.
[FIG. 5] FIG. 5 is a diagram illustrating a configuration of an observation apparatus 1E.

[FIG. 6] FIG. 6 is a diagram illustrating a configuration of an observation apparatus 1F.

[FIG. 7] FIG. 7 is a diagram illustrating a configuration of an observation apparatus 1G.

[FIG. 8] FIG. 8 includes (a) - (e) diagrams illustrating examples of scanning of a light irradiation direction on an observation object S from each of irradiation units 31 to 35.

[FIG. 9] FIG. 9 is a diagram illustrating an example of the scanning of the light irradiation direction on the observation object S from each of the irradiation units 31 to 35 when an interference intensity image is acquired on each of two focal planes.

[FIG. 10] FIG. 10 is a diagram illustrating another example of the scanning of the light irradiation direction on the observation object S from each of the irradiation units 31 to 35 when the interference intensity image is acquired on each of the two focal planes.

[FIG. 11] FIG. 11 includes (a), (b) diagrams each schematically illustrating incidence of first light and second light on the observation object S and incidence of the first light and the second light on an imaging unit 50 after passing through the observation object S.

[FIG. 12] FIG. 12 is a diagram illustrating a configuration of a processing unit 60 of the observation apparatus.

[FIG. 13] FIG. 13 is a flowchart illustrating an observation method.

[FIG. 14] FIG. 14 is a diagram for describing a processing flow of an image update unit 66 in an image update step S6.

[FIG. 15] FIG. 15 is a diagram showing the simulation results (an image of a phase of a complex amplitude image) in the case in which an update process is performed only for the phase of the complex amplitude image by the image update unit 66 in the image update step S6.

[FIG. 16] FIG. 16 is a diagram showing the simulation results (a phase differential image) in the case in which the update process is performed only for the phase of the complex amplitude image by the image update unit 66 in the image update step S6.

[FIG. 17] FIG. 17 is a diagram showing the simulation results (a refractive index distribution image) in the case in which the update process is performed only for the phase of the complex amplitude image by the image update unit 66 in the image update step S6.

[FIG. 18] FIG. 18 is a diagram showing the simulation results (an image of an amplitude of the complex amplitude image) in the case in which the update process is performed for both the amplitude and the phase of the complex amplitude image by the image update unit 66 in the image update step S6.

[FIG. 19] FIG. 19 is a diagram showing the simulation results (the image of the phase of the complex amplitude image) in the case in which the update process is performed for both the amplitude and the phase of the complex amplitude image by the image update unit 66 in the image update step S6.

[FIG. 20] FIG. 20 is a diagram showing the simulation results (the phase differential image) in the case in which the update process is performed for both the amplitude and the phase of the complex amplitude image by the image update unit 66 in the image update step S6.

[FIG. 21] FIG. 21 is a diagram showing the simulation results (the refractive index distribution image) in the case in which the update process is performed for both the amplitude and the phase of the complex amplitude image by the image update unit 66 in the image update step S6.

[FIG. 22] FIG. 22 is a diagram illustrating a configuration of an observation apparatus 1H.

## Description of Embodiments

Hereinafter, embodiments of an observation apparatus and an observation method will be described in detail with reference to the accompanying drawings. In the description of the drawings, the same elements will be denoted by the same reference signs, and redundant description will be omitted. The present invention is not limited to these examples, and the Claims, their equivalents, and all the changes within the scope are intended as would fall within the scope of the present invention.

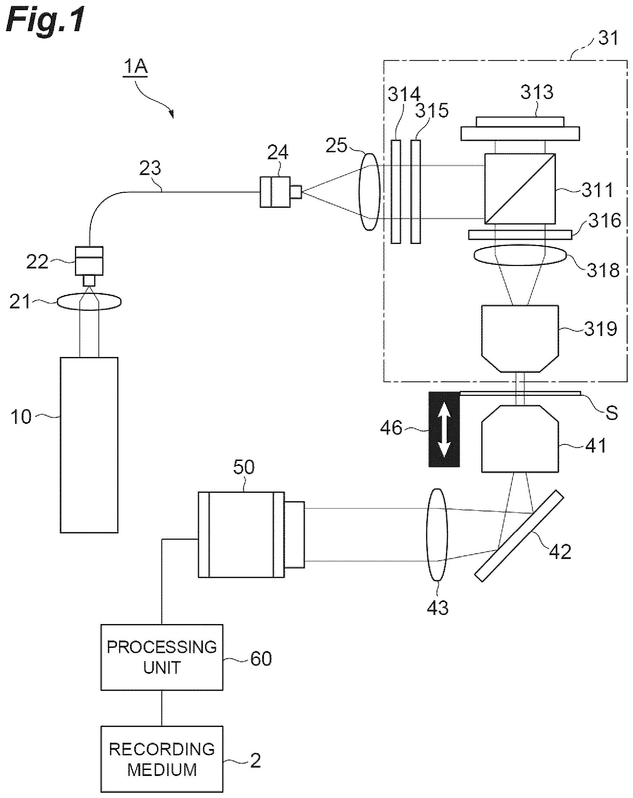

First, a configuration of an optical system of an observation apparatus will be described with reference to FIG. 1 to FIG. 7, and then the details of contents of processing in an observation apparatus and an observation method will be described.

FIG. 1 is a diagram illustrating a configuration of an observation apparatus 1A. The observation apparatus 1A includes a light source 10, an irradiation unit 31, an imaging unit 50, and a processing unit 60, and the like. The light source 10 outputs spatially coherent light. The light output from the light source 10 may be temporally coherent light, or may not be temporally coherent light.

The light source 10 may be a laser light source, or may be a light source such as, for example, a super luminescent diode (SLD), a super continuum (SC) light source, or an optical frequency comb light source. Further, spatially incoherent light output from a light emitting diode (LED), a mercury lamp, or the like may pass through a pinhole or the like to increase spatial coherence.

A lens 21 is optically coupled to the light source 10, focuses the light output from the light source 10 on a light input end 22 of an optical fiber 23, and inputs the light to the light input end 22. The optical fiber 23 guides the light input to the light input end 22 to a light output end 24. The light guided by the optical fiber 23 is output as diverging light from the light output end 24. A lens 25 is optically coupled to the light output end 24, inputs and collimates the light output as the diverging light from the light output end 24, and outputs the collimated light to the irradiation unit 31.

The irradiation unit 31 inputs the light output from the light source 10 and passed through the lens 21, the optical fiber 23, and the lens 25, and generates first light and second light from the input light. Further, the irradiation unit 31 irradiates an observation object S by combining the first light and the second light with each other. The irradiation unit 31 irradiates the observation object S with the first light along a fixed light irradiation direction, and irradiates the observation object S with the second light along each of a plurality of light irradiation directions.

The irradiation unit 31 includes a beam splitter 311, a spatial light modulator 313 of a phase modulation type, a polarizer 314, a half wave plate 315, a polarizer 316, a lens 318, and an objective lens 319.

The beam splitter 311 reflects the light arriving through the polarizer 314 and the half wave plate 315 provided between the beam splitter 311 and the lens 25 to the spatial light modulator 313. Further, the beam splitter 311 inputs the light arriving from the spatial light modulator 313, and outputs the light to the polarizer 316.

The spatial light modulator 313, out of linearly polarized light of a first orientation and linearly polarized light of a second orientation which are incident on a modulation plane and are orthogonal to each other, selectively performs phase modulation on the linearly polarized light of the second orientation, without performing phase modulation on the linearly polarized light of the first orientation. The polarizer 314 and the half wave plate 315 set the polarization state of the light such that the light incident on the modulation plane of the spatial light modulator 313 from the beam splitter 311 includes the linearly polarized light components of the first orientation and the second orientation with amounts similar to each other.

The polarizer 316 inputs the light arriving from the spatial light modulator 313 through the beam splitter 311, and enables the linearly polarized light of the first orientation and the linearly polarized light of the second orientation respectively included in the light to interfere with each other. The polarizer 316 has an optic axis of an orientation different by 45 degrees from a polarization orientation of the light (the linearly polarized light of the first orientation and the linearly polarized light of the second orientation) arriving from the spatial light modulator 313 through the beam splitter 311, and selectively transmits the polarized light component of the orientation of the optic axis out of the input light. The lens 318 and the objective lens 319 irradiate the observation object S with each of the first light and the second light output from the polarizer 316 as a plane wave.

The irradiation unit 31 having the configuration described above can set the linearly polarized light of the first orientation, which is not phase modulated by the spatial light modulator 313, as the first light, and irradiate the observation object S with the first light along the fixed light irradiation direction. The irradiation unit 31 can set the linearly polarized light of the second orientation, which is phase modulated by the spatial light modulator 313, as the second light, and irradiate the observation object S with the second light along each of the plurality of light irradiation directions.

The light irradiation direction of the second light on the observation object S can be set by a direction and an interval of a phase modulation pattern on the modulation plane of the spatial light modulator 313. Further, a phase difference between the first light and the second light can be set by a shift of the phase modulation pattern on the modulation plane of the spatial light modulator 313.

An objective lens 41 inputs the light (the first light, the second light) which irradiates the observation object S by the irradiation unit 31 and passes through the observation object S, and outputs the light to a mirror 42. A lens 43 inputs the light output from the objective lens 41 and reflected by the mirror 42, and inputs the light to an imaging plane of the imaging unit 50.

A focal plane position setting unit 46 sets a position of a focal plane (a plane optically conjugate to the imaging plane of the imaging unit 50) by adjusting a position of the observation object S (or a sample stage on which the observation object S is placed) along a direction of an optical axis of the objective lens 41. The focal plane position setting unit 46 may be configured to include, for example, a movable stage or a piezo actuator.

The imaging unit 50 receives both the first light and the second light arriving at the imaging plane from the lens 43, and captures an interference intensity image generated by interference between the first light and the second light. The imaging unit 50 captures the interference intensity image in the case in which the phase difference between the first light and the second light is set to each of a plurality of phase differences, for each of the plurality of light irradiation directions of the second light and each of a plurality of focal planes.

The processing unit 60 is electrically connected to the imaging unit 50, and generates a complex amplitude image and the like by performing required processing based on the interference intensity image captured by the imaging unit 50. The processing contents performed by the processing unit 60 will be described later.

The processing unit 60 may be configured by using a computer. The processing unit 60 includes a processing device such as a CPU, a GPU, a DSP, an FPGA, or the like, and a storage unit such as a hard disk drive, a flash memory, a RAM, a ROM, or the like.

The storage unit stores various types of images, a program for performing the processing, and the like. The above program may be stored in the storage unit at the time of manufacture or shipment of the observation apparatus, may be acquired via a communication line after shipment and then stored in the storage unit, or may be recorded in a computer readable recording medium 2 and then stored in the storage unit. The recording medium 2 may be an arbitrary medium such as a flexible disk, a CD-ROM, a DVD-ROM, a BD-ROM, a USB memory, or the like.

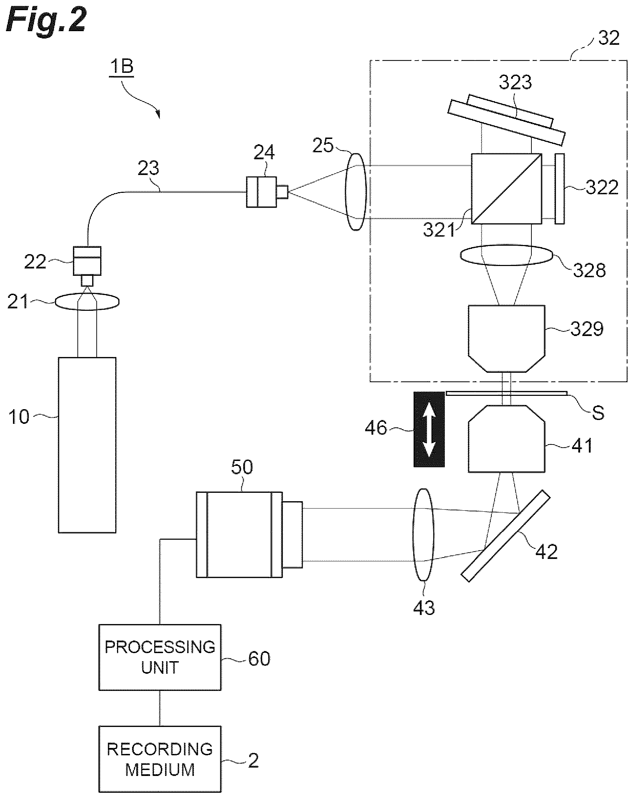

FIG. 2 is a diagram illustrating a configuration of an observation apparatus 1B. The observation apparatus 1B includes the light source 10, an irradiation unit 32, the imaging unit 50, and the processing unit 60, and the like. As compared with the observation apparatus 1A (FIG. 1), the observation apparatus 1B (FIG. 2) is different in that the irradiation unit 32 is provided instead of the irradiation unit 31.

The irradiation unit 32 includes a beam splitter 321, a mirror 322, a spatial light modulator 323 of an intensity modulation type, a lens 328, and an objective lens 329. The spatial light modulator 323 may be a digital micromirror device (DMD).

The beam splitter 321 splits the light arriving from the lens 25 into first split light (the first light) and second split light (the second light), outputs the first split light to the mirror 322, and outputs the second split light to the spatial light modulator 323. Further, the beam splitter 321 inputs the first split light which is reflected by the mirror 322, inputs the second split light which is intensity modulated by the spatial light modulator 323, combines the first split light and the second split light, and outputs the combined light to the lens 328. The lens 328 and the objective lens 329 irradiate the observation object S with each of the first split light and the second split light output from the beam splitter 321 as a plane wave.

The irradiation unit 32 having the configuration described above can irradiate the observation object S with the first split light reflected by the mirror 322 along the fixed light irradiation direction. The irradiation unit 32 can irradiate the observation object S with the second split light intensity modulated by the spatial light modulator 323 along each of the plurality of light irradiation directions.

The light irradiation direction of the second split light on the observation object S can be set by a direction and an interval of an intensity modulation pattern on a modulation plane of the spatial light modulator 323. Further, the phase difference between the first split light and the second split light can be set by a shift of the intensity modulation pattern on the modulation plane of the spatial light modulator 323.

In addition, the phase difference can also be adjusted by a position of the mirror 322 or the spatial light modulator 323. However, the case in which the phase difference is set by the shift of the intensity modulation pattern on the modulation plane of the spatial light modulator 323 is preferable in that there is no mechanical movement of the component.

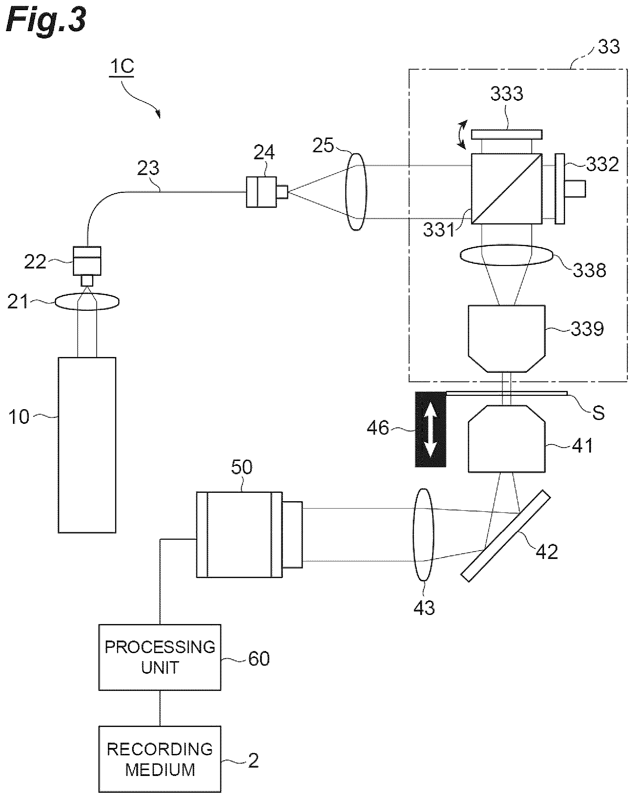

FIG. 3 is a diagram illustrating a configuration of an observation apparatus 1C. The observation apparatus 1C includes the light source 10, an irradiation unit 33, the imaging unit 50, and the processing unit 60, and the like. As compared with the observation apparatus 1A (FIG. 1), the observation apparatus 1C (FIG. 3) is different in that the irradiation unit 33 is provided instead of the irradiation unit 31.

The irradiation unit 33 includes a beam splitter 331, a mirror 332, a mirror 333, a lens 338, and an objective lens 339. For the mirror 332, a position of a reflection surface is set to be changeable along a direction perpendicular to the reflection surface by driving by using, for example, a piezo actuator. For the mirror 333, an orientation of a reflection surface is set to be changeable by using, for example, a galvano mirror, a voice coil mirror, a piezo tilt mirror, or the like.

The beam splitter 331 splits the light arriving from the lens 25 into the first split light (the first light) and the second split light (the second light), outputs the first split light to the mirror 332, and outputs the second split light to the mirror 333. Further, the beam splitter 331 inputs the first split light which is reflected by the mirror 332, inputs the second split light which is reflected by the mirror 333, combines the first split light and the second split light, and outputs the combined light to the lens 338. The lens 338 and the objective lens 339 irradiate the observation object S with each of the first split light and the second split light output from the beam splitter 331 as a plane wave.

The irradiation unit 33 having the configuration described above can irradiate the observation object S with the first split light reflected by the mirror 332 along the fixed light irradiation direction. The irradiation unit 33 can irradiate the observation object S with the second split light reflected by the mirror 333 along each of the plurality of light irradiation directions.

The light irradiation direction of the second split light on the observation object S can be set by the orientation of the reflection surface of the mirror 333. Further, the phase difference between the first split light and the second split light can be set by the position of the reflection surface of the mirror 332. The phase difference may be set by a position of the reflection surface of the mirror 333.

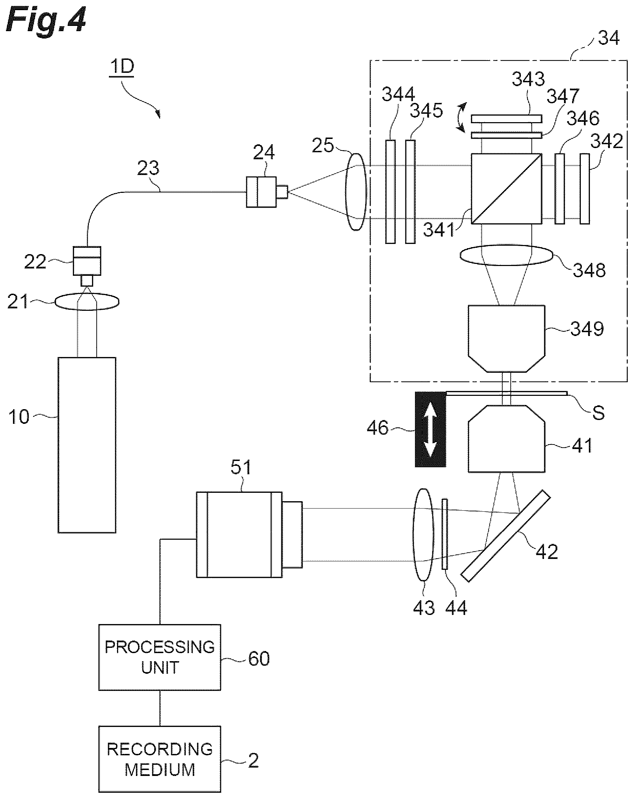

FIG. 4 is a diagram illustrating a configuration of an observation apparatus 1D. The observation apparatus 1D includes the light source 10, an irradiation unit 34, an imaging unit 51, and the processing unit 60, and the like. As compared to the observation apparatus 1A (FIG. 1), the observation apparatus 1D (FIG. 4) is different in that the irradiation unit 34 is provided instead of the irradiation unit 31, different in that the imaging unit 51 is provided instead of the imaging unit 50, and different in that a quarter wave plate 44 disposed on an optical path between the objective lens 41 and the imaging unit 51 is further provided.

The irradiation unit 34 includes a polarization beam splitter 341, a mirror 342, a mirror 343, a polarizer 344, a half wave plate 345, a quarter wave plate 346, a quarter wave plate 347, a lens 348, and an objective lens 349. For the mirror 343, an orientation of a reflection surface is set to be changeable by using, for example, a galvano mirror, a voice coil mirror, a piezo tilt mirror, or the like.

The polarization beam splitter 341 splits by polarization the light arriving through the polarizer 344 and the half wave plate 345 provided between the polarization beam splitter 341 and the lens 25 into the first split light (the first light) and the second split light (the second light), outputs the first split light to the mirror 342, and outputs the second split light to the mirror 343.

The quarter wave plate 346 is provided between the mirror 342 for reflecting the first split light and the polarization beam splitter 341, and rotates an orientation of the linear polarization of the first split light by 90 degrees by passing the first split light twice. The quarter wave plate 347 is provided between the mirror 343 for reflecting the second split light and the polarization beam splitter 341, and rotates an orientation of the linear polarization of the second split light by 90 degrees by passing the second split light twice.

The polarization beam splitter 341 inputs the first split light which is reflected by the mirror 342 and passed through the quarter wave plate 346, inputs the second split light which is reflected by the mirror 343 and passed through the quarter wave plate 347, combines by polarization the first split light and the second split light input as described above, and outputs the combined light to the lens 348. The lens 348 and the objective lens 349 irradiate the observation object S with each of the first split light and the second split light output from the polarization beam splitter 341 as a plane wave.

The irradiation unit 34 having the configuration described above can irradiate the observation object S with the first split light reflected by the mirror 342 along the fixed light irradiation direction. The irradiation unit 34 can irradiate the observation object S with the second split light reflected by the mirror 343 along each of the plurality of light irradiation directions. The light irradiation direction of the second split light on the observation object S can be set by the orientation of the reflection surface of the mirror 343.

The quarter wave plate 44 is provided on an optical path between the objective lens 41 and the imaging unit 51. The quarter wave plate 44 inputs the first split light and the second split light which are linearly polarized light beams orthogonal to each other, and outputs the first split light and the second split light as circularly polarized light beams having rotation directions different from each other.

The imaging unit 51 includes a polarization camera capable of individually and simultaneously performing imaging respectively for a plurality of polarized light components. The imaging unit 51 receives the first split light and the second split light passing through the quarter wave plate 44, and thus, the interference intensity image in the case in which the phase difference between the light beams is set to each of the plurality of phase differences can be captured.

As the polarization camera, an image sensor (Polarsens (registered trademark)) commercialized by Sony Corporation, or an image sensor (Area Scan Polarization Sensor) commercialized by Teledyne DALSA may be used. Each of the above sensors can simultaneously capture two-dimensional images of linearly polarized light beams of four orientations, and can simultaneously acquire four interference intensity images having phase differences different by $\pi/2$. Further, as the polarization camera, an image sensor (Line Scan Polarization Sensor) commercialized by Teledyne DALSA may also be used, and the above sensor can simultaneously capture two-dimensional images of linearly polarized light beams of three orientations.

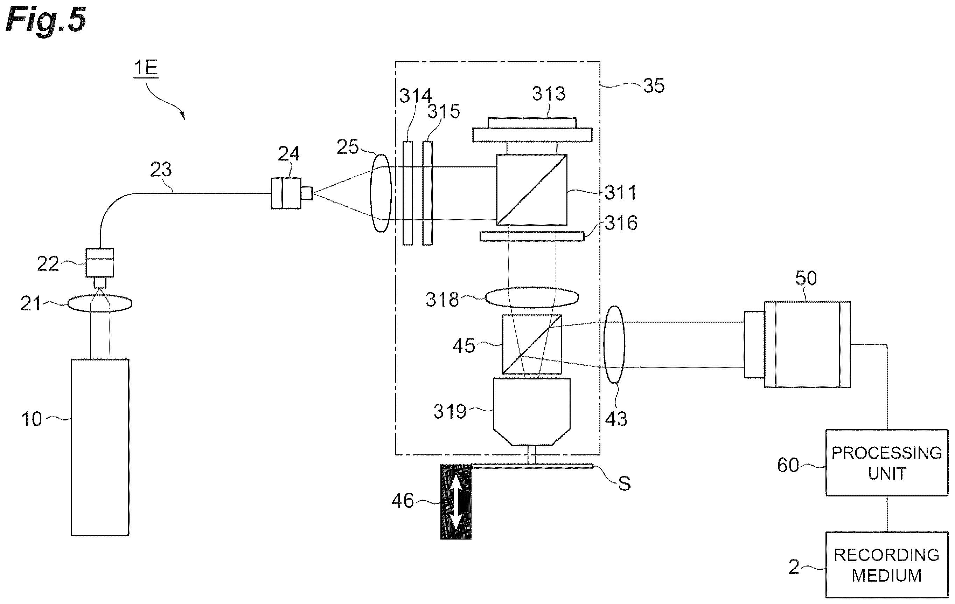

FIG. 5 is a diagram illustrating a configuration of an observation apparatus 1E. The observation apparatus 1A (FIG. 1) captures the interference intensity image generated by the interference between the first light and the second light transmitted through the observation object S. On the other hand, the observation apparatus 1E (FIG. 5) captures the interference intensity image generated by the interference between the first light and the second light reflected by the observation object S.

The observation apparatus 1E (FIG. 5) includes the light source 10, an irradiation unit 35, the imaging unit 50, and the processing unit 60, and the like. As compared with the observation apparatus 1A (FIG. 1), the observation apparatus 1E (FIG. 5) is different in that the irradiation unit 35 is provided instead of the irradiation unit 31. In the irradiation unit 35, in the configuration of the irradiation unit 31, a beam splitter 45 is disposed on an optical path between the lens 318 and the objective lens 319.

At the time of the light irradiation on the observation object S, the observation object S is irradiated with the first light and the second light output from the beam splitter 311 sequentially through the polarizer 316, the lens 318, the beam splitter 45, and the objective lens 319. At the time of the imaging by the imaging unit 50, the first light and the second light reflected by the observation object S reach the imaging unit 50 sequentially through the objective lens 319, the beam splitter 45, and the lens 43. The objective lens 319 provided in the observation apparatus 1E (FIG. 5) also serves as the objective lens 41 provided in the observation apparatus 1A (FIG. 1).

The configuration of the reflection type of the observation apparatus 1E (FIG. 5) corresponds to the configuration of the transmission type of the observation apparatus 1A (FIG. 1). In a similar way, the configuration of the reflection type can also be used corresponding to the configuration of the transmission type of each of the observation apparatus 1B (FIG. 2), the observation apparatus 1C (FIG. 3), and the observation apparatus 1D (FIG. 4). In the case of the configuration of the reflection type corresponding to the observation apparatus 1D (FIG. 4), the quarter wave plate 44 and the imaging unit 51 are used.

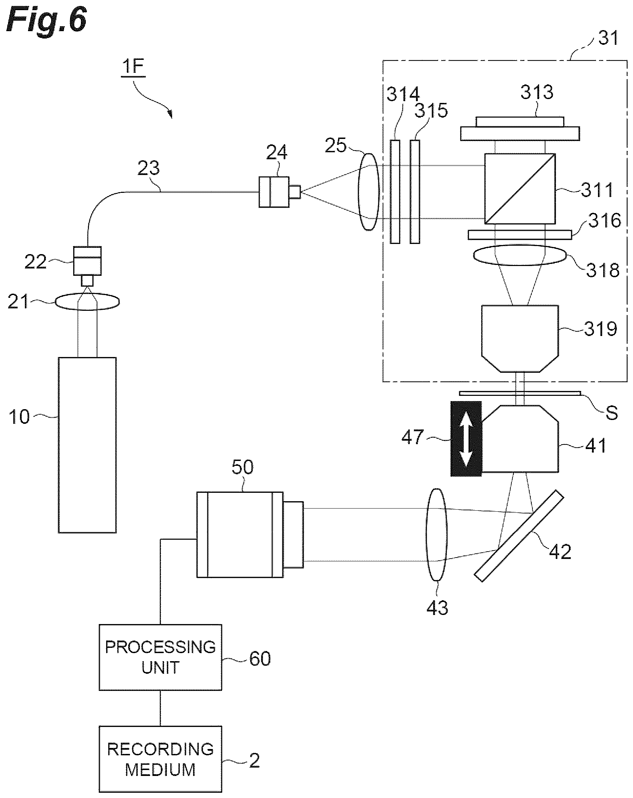

FIG. 6 is a diagram illustrating a configuration of an observation apparatus 1F. As compared with the observation apparatus 1A (FIG. 1), the observation apparatus 1F (FIG. 6) is different in that a focal plane position setting unit 47 for adjusting the position of the objective lens 41 is provided instead of the focal plane position setting unit 46 for adjusting the position of the observation object S.

The focal plane position setting unit 47 sets the position of the focal plane (the plane optically conjugate to the imaging plane of the imaging unit 50) by adjusting the position of the objective lens 41 along the direction of the optical axis of the objective lens 41. The focal plane position setting unit 47 may be configured to include, for example, a movable stage or a piezo actuator.

In a similar way, the focal plane position setting unit 47 may be provided instead of the focal plane position setting unit 46 in each of the observation apparatus 1B (FIG. 2), the observation apparatus 1C (FIG. 3), and the observation apparatus 1D (FIG. 4).

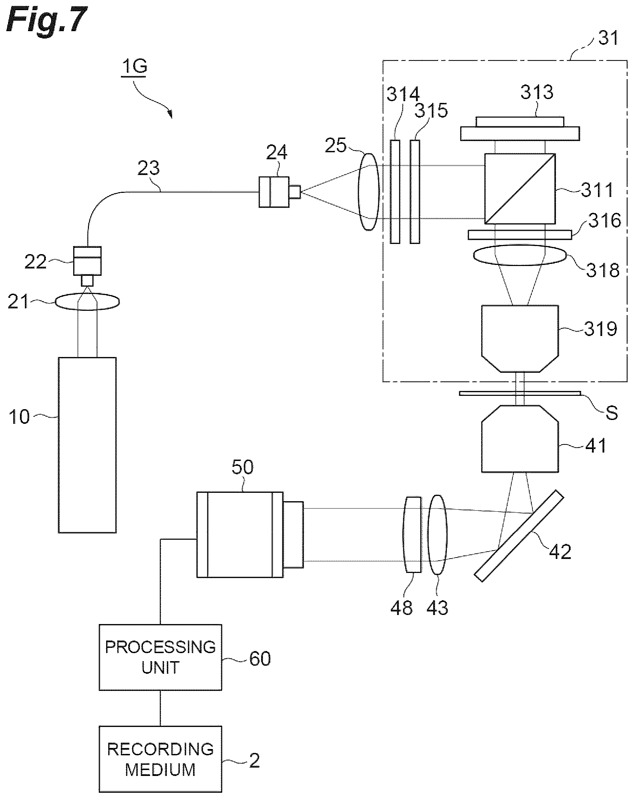

FIG. 7 is a diagram illustrating a configuration of an observation apparatus 1G. As compared with the observation apparatus 1A (FIG. 1), the observation apparatus 1G (FIG. 7) is different in that a focal plane position setting unit 48 disposed between the objective lens 41 and the imaging unit 50 is provided instead of the focal plane position setting unit 46 for adjusting the position of the observation object S.

The focal plane position setting unit 48 sets the position of the focal plane (the plane optically conjugate to the imaging plane of the imaging unit 50) by adjusting a focal length of a lens in which a focal length is variable. The focal plane position setting unit 48 may be configured to include, for example, a liquid lens. The focal plane position setting unit 48 is provided on an optical path between the lens 43 and the imaging unit 50 in the configuration illustrated in FIG. 7, and in addition, the focal plane position setting unit 48 may be provided on an optical path between the mirror 42 and the lens 43, or may be provided on an optical path between the objective lens 41 and the mirror 42.

In a similar way, the focal plane position setting unit 48 may be provided instead of the focal plane position setting unit 46 in each of the observation apparatus 1B (FIG. 2), the observation apparatus 1C (FIG. 3), the observation apparatus 1D (FIG. 4), and the observation apparatus 1E (FIG. 5).

Each of the focal plane position setting units 47 and 48 illustrated in FIG. 6 and FIG. 7 is a unit for setting the position of the focal plane by adjusting the imaging optical system which is provided between the observation object S and the imaging unit 50. The focal plane position setting unit for adjusting the imaging optical system may have other configurations. Further, a plurality of focal plane position setting units may be combined.

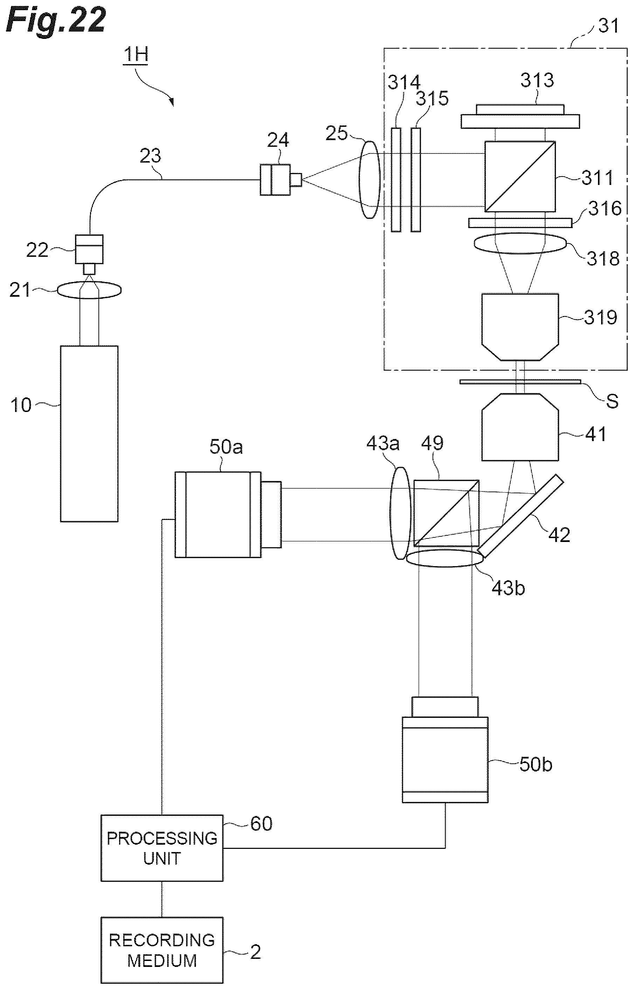

FIG. 22 is a diagram illustrating a configuration of an observation apparatus 1H. The observation apparatus 1H includes the light source 10, the irradiation unit 31, imaging units 50a and 50b, and the processing unit 60, and the like. As compared with the observation apparatus 1A (FIG. 1), the observation apparatus 1H (FIG. 22) is different in that a beam splitter 49 is further provided, and different in that lenses 43a and 43b and the imaging units 50a and 50b are provided instead of the lens 43 and the imaging unit 50.

The objective lens 41 inputs the light (the first light, the second light) which irradiates the observation object S by the irradiation unit 31 and passes through the observation object S, and outputs the light to the mirror 42. The beam splitter 49 inputs the light output from the objective lens 41 and reflected by the mirror 42, transmits a part of the light, and further, reflects another part of the light. The beam splitter 49 is configured by using, for example, a half mirror.

The lens 43a inputs the light which is transmitted through the beam splitter 49, and inputs the light to an imaging plane of the imaging unit 50a. On the other hand, the lens 43b inputs the light which is reflected by the beam splitter 49, and inputs the light to an imaging plane of the imaging unit 50b.

An optical system from the beam splitter 49 to the imaging unit 50a through the lens 43a and an optical system from the beam splitter 49 to the imaging unit 50b through the lens 43b are respectively adjusted such that the positions of the focal planes (the planes optically conjugate to the imaging planes) respectively of the imaging units 50a and 50b are different from each other.

For example, the focal length of each of the lenses 43a and 43b is set to f, an optical distance between the lens 43a and the imaging unit 50a is set to f, and an optical distance between the lens 43b and the imaging unit 50b is set to $f+\delta$. By using the above configuration, the respective focal planes of the imaging units 50a and 50b can be separated from each other by $\delta$. By adjusting the position of each of the imaging units 50a and 50b, the position of the focal plane can be adjusted.

The imaging unit 50a receives both the first light and the second light arriving at the imaging plane from the lens 43a, and captures the interference intensity image generated by the interference between the first light and the second light. Further, the imaging unit 50b receives both the first light and the second light arriving at the imaging plane from the lens 43b, and captures the interference intensity image generated by the interference between the first light and the second light. Therefore, by using the imaging units 50a and 50b, for each of the plurality of light irradiation directions of the second light and each of the plurality of focal planes, the interference intensity image in the case in which the phase difference between the first light and the second light is set to each of the plurality of phase differences can be captured.

The processing unit 60 is electrically connected respectively to the imaging units 50a and 50b, and generates the complex amplitude image or the like by performing the required processing based on the interference intensity image which is captured by each of the imaging units 50a and 50b.

In the configuration of the observation apparatus 1H (FIG. 22) described above, the focal plane position setting unit can set the position of the focal plane by adjusting the imaging optical system which is provided between the observation object S and the imaging units 50a and 50b, specifically, by adjusting the position of each of the imaging units 50a and 50b or the focal length of each of the lenses 43a and 43b.

The focal plane position setting unit 48 (for example, the configuration including the liquid lens in which the focal length is variable) as provided in the observation apparatus 1G (FIG. 7) may be provided on both or any one of the optical path between the beam splitter 49 and the imaging unit 50a and the optical path between the beam splitter 49 and the imaging unit 50b. The focal plane position setting unit 46 for adjusting the position of the observation object S and the focal plane position setting unit 47 for adjusting the position of the objective lens 41 may not be provided.

In a similar way, the configuration in which the light is split into two light beams by the beam splitter at the subsequent stage of the objective lens and the imaging is performed by the two imaging units may be used in each of the observation apparatus 1B (FIG. 2), the observation apparatus 1C (FIG. 3), the observation apparatus 1D (FIG. 4), and the observation apparatus 1E (FIG. 5).

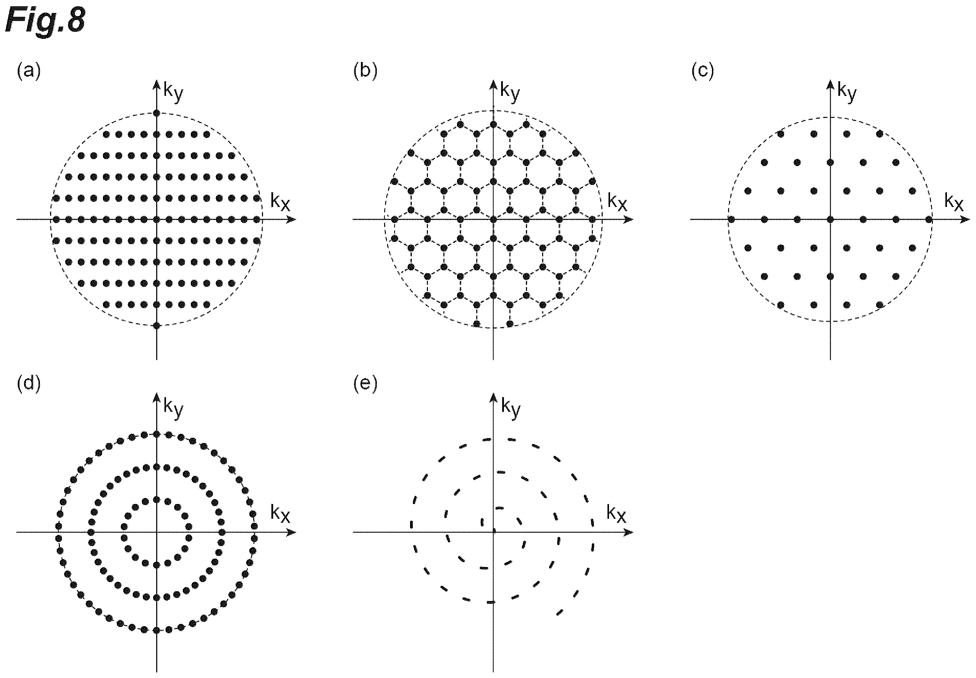

FIG. 8 includes diagrams illustrating examples of scanning of the light irradiation direction on the observation object S from each of the irradiation units 31 to 35. In this case, an xyz orthogonal coordinate system having a z axis in a direction parallel to the optical axis of the objective lens used for irradiating the observation object S with the light is set, and further, each of the light irradiation directions is represented by a position in the $k_x k_y k_z$ wavenumber space. In the diagrams, a position of each circular point represents the light irradiation direction in the $k_x k_y$ plane in which the horizontal axis is set to $k_x$ and the vertical axis is set to $k_y$.

The scanning of the light irradiation direction, in the $k_x k_y$ plane, (a) may be discretely and periodically arranged in a rectangular lattice shape, (b) may be discretely and periodically arranged in a honeycomb shape, (c) may be discretely and periodically arranged in a hexagonal lattice shape, (d) may be discretely arranged on a circumference of each of a plurality of concentric circles, or (e) may be discretely arranged in a spiral shape.

In any of the above cases, the light irradiation direction can be scanned as far as it is allowed by the objective lens used for irradiating the observation object S with the light. Raster scan or random scan may be used. In the case of the raster scan, return scan may be performed or may not be performed.

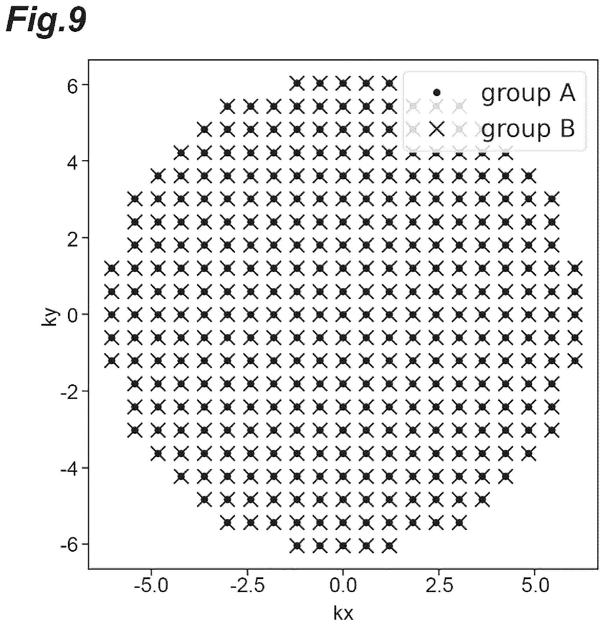

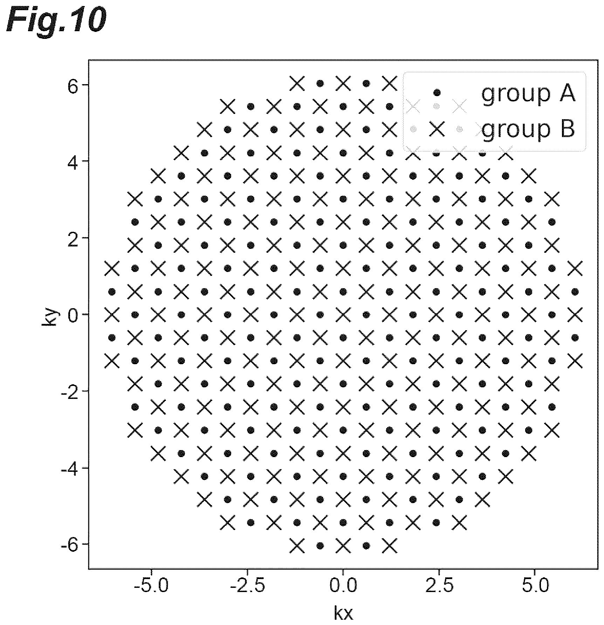

Each of FIG. 9 and FIG. 10 is a diagram illustrating an example of the scanning of the light irradiation direction on the observation object S from each of the irradiation units 31 to 35 in the case in which the interference intensity image is acquired on each of the two focal planes. In each of the diagrams, a configuration in which the scanning of the light irradiation direction is arranged discretely and periodically in the rectangular lattice shape on the $k_x k_y$ plane is illustrated.

In the diagrams, the light irradiation direction (a group A) in the case in which the interference intensity image is captured on one focal plane is indicated by a black circular point, and the light irradiation direction (a group B) in the case in which the interference intensity image is captured on the other focal plane is indicated by an x mark point. The light irradiation direction (the black circular point) in the case in which the interference intensity image is captured on the one focal plane and the light irradiation direction (the x mark point) in the case in which the interference intensity image is captured on the other focal plane may be arranged on the $k_x k_y$ plane so as to coincide with each other as illustrated in FIG. 9, or may be alternately arranged as illustrated in FIG. 10.

Next, an observation method performed by using the observation apparatus 1A (FIG. 1) will be described. The same applies to the case in which the observation apparatus of each of the other configurations is used. In the following description, the case in which the interference intensity image is captured on each of two focal planes A and B will be described.

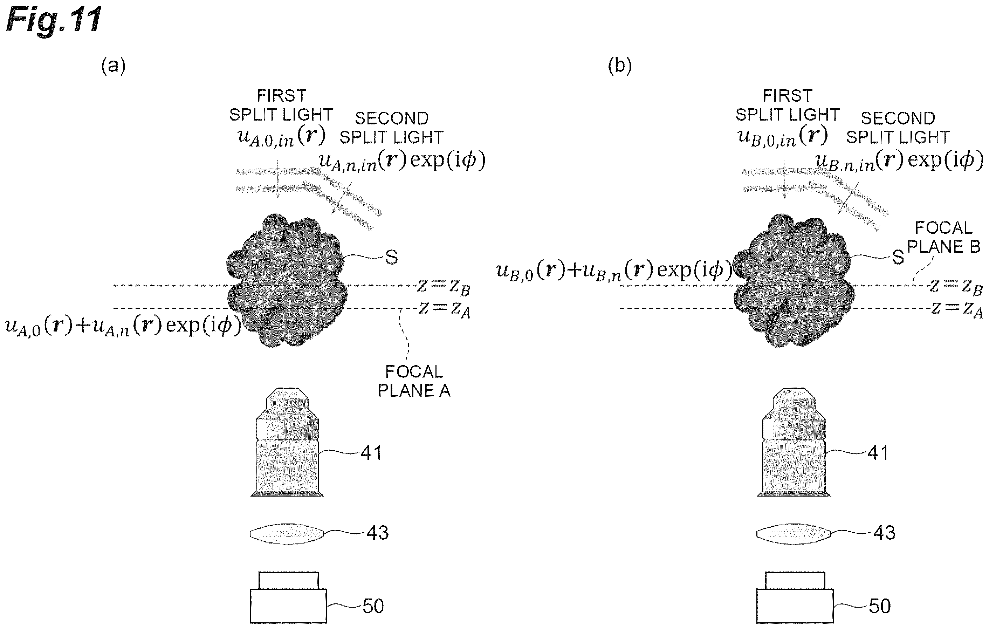

Each of (a) and (b) in FIG. 11 is a diagram schematically illustrating the incidence of the first light and the second light on the observation object S, and in addition, the incidence of the first light and the second light on the imaging unit 50 after passing through the observation object S.

As illustrated in (a) in FIG. 11, in the case in which the interference intensity image is captured on the focal plane A at the position of $z = z_A$, a wavefront of the first light which is incident on the observation object S is represented as $u_{A,0,in}(r)$, a wavefront of the second light which is incident on the observation object S along the n-th light irradiation direction (n = 1 to N) out of the plurality of (N) light irradiation directions of the second light is represented as $u_{A,n,in}(r)\exp(i\phi)$, a wavefront of the first light on the focal plane A is represented as $u_{A,0}(r)$, and a wavefront of the second light on the focal plane A is represented as $u_{A,n}(r)\exp(i\phi)$.

As illustrated in (b) in FIG. 11, in the case in which the interference intensity image is captured on the focal plane B at the position of $z = z_B$, a wavefront of the first light which is incident on the observation object S is represented as $u_{B,0,in}(r)$, a wavefront of the second light which is incident on the observation object S along the n-th light irradiation direction (n = 1 to N) out of the plurality of (N) light irradiation directions of the second light is represented as $u_{B,n,in}(r)\exp(i\phi)$, a wavefront of the first light on the focal plane B is represented as $u_{B,0}(r)$, and a wavefront of the second light on the focal plane B is represented as $u_{B,n}(r)\exp(i\phi)$.

z is a variable representing the position along the direction of the optical axis of the objective lens 41. r is a variable representing the position on the plane perpendicular to the optical axis of the objective lens 41. $\phi$ is the phase difference between the first light and the second light. i is an imaginary unit.

Each of the focal planes A and B may be a plane set within the observation object S, may be a plane set outside the observation object S and in the imaging unit 50 side with respect to the observation object S, or may be a plane set outside the observation object S and in the irradiation unit 31 side with respect to the observation object S. One focal plane out of the focal planes A and B may be set within the observation object S, and the other focal plane may be set outside the observation object S. Both the focal planes A and B may be set outside the observation object S. Both the focal planes A and B may be set within the observation object S. It is preferable that both the focal planes A and B are set within the observation object S and near the center position of the observation object S along the direction of the optical axis of the objective lens.

It is preferable that a separation distance $|z_A - z_B|$ between the focal plane A and the focal plane B is set to be longer than a depth of focus based on a numerical aperture of the objective lens 41, so that the interference intensity images obtained respectively on the focal planes are different from each other. Further, it is preferable that the separation distance $|z_A - z_B|$ between the focal plane A and the focal plane B is set to be as short as possible, in order to complete repeated update processing in an image update unit 66 (to be described later) of the processing unit 60 in a short time.

The number N of the light irradiation directions of the second light may be set to be the same or may be set to be different from each other between the case in which the interference intensity image is captured on the focal plane A and the case in which the interference intensity image is captured on the focal plane B.

The interference intensity image $I_n(r, \phi)$ acquired by the imaging by using the imaging unit 50 is represented by the following Formula (1). The interference intensity image $I_n(r, \phi)$ is an interference intensity image acquired by the imaging by using the imaging unit 50 when the phase difference between the first light and the second light is set to $\phi$, and in the case in which, for the observation object S, the first light is incident on the observation object along the fixed light irradiation direction, and the second light is incident on the observation object along the n-th light irradiation direction. In addition, in this case, a subscript of A or B indicating the position of the focal plane is omitted. In the following description also, the subscript of A or B will be omitted in the case in which they can be similarly described.

[Formula 1]

$$I_n(\mathbf{r}, \phi) = \left| u_0(\mathbf{r}) + u_n(\mathbf{r}) \exp(i\phi) \right|^2 \tag{1}$$

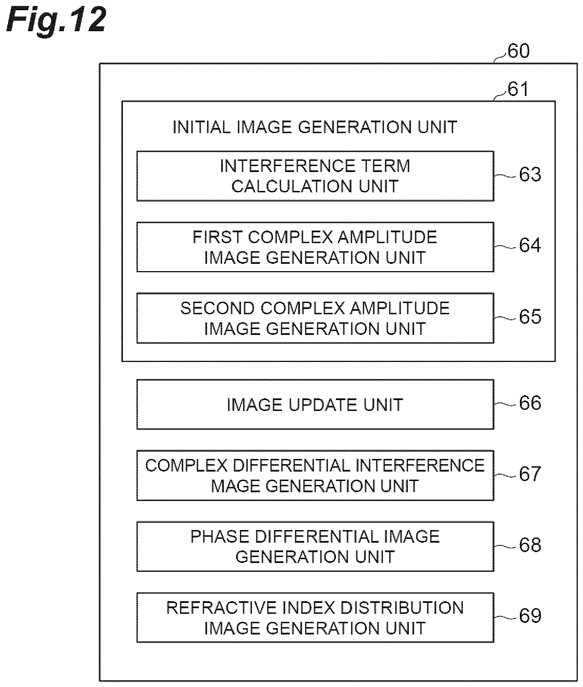

FIG. 12 is a diagram illustrating a configuration of the processing unit 60 provided in the observation apparatus. The processing unit 60 includes an initial image generation unit 61, an image update unit 66, a complex differential interference image generation unit 67, a phase differential image generation unit 68, and a refractive index distribution image generation unit 69. The initial image generation unit 61 includes an interference term calculation unit 63, a first complex amplitude image generation unit 64, and a second complex amplitude image generation unit 65.

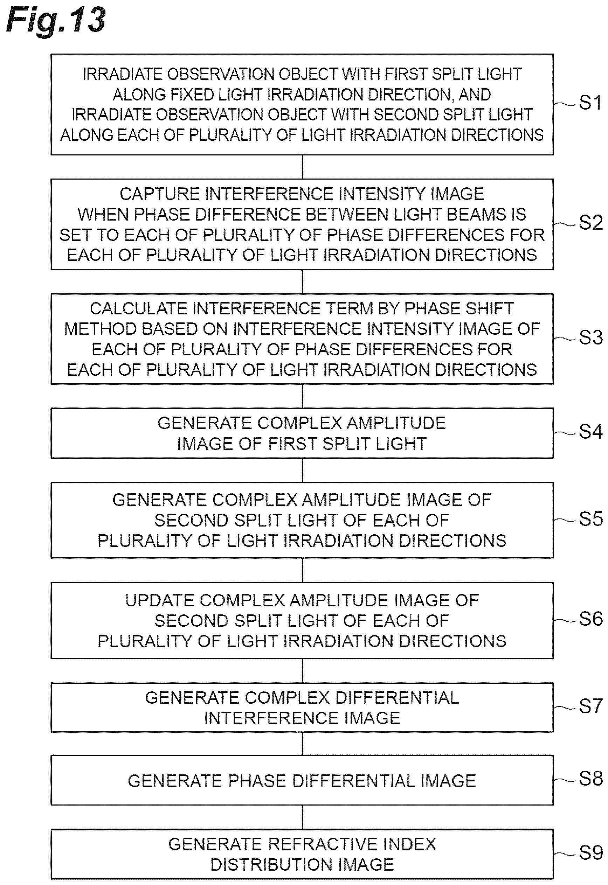

FIG. 13 is a flowchart illustrating the observation method. In the description of steps S1 to S5 out of steps S1 to S9 of the observation method, the same processing can be performed and the same Formula can be described between the case in which the interference intensity image is captured on the focal plane A and the case in which the interference intensity image is captured on the focal plane B, and thus, the subscript of A or B will be omitted.

In an irradiation step S1, the irradiation unit 31 irradiates the observation object S with the first light and the second light in an overlapping manner. In this case, the light irradiation direction of the first light on the observation object S is set to be fixed, the light irradiation direction of the second light on the observation object S is set to be each of the plurality of light irradiation directions, and the phase difference $\phi$ between the first light and the second light is set to each value.

In an imaging step S2, the imaging unit 50 captures the interference intensity image (Formula (1)) in the case in which the phase difference $\phi$ between the first light and the second light is set to each of the plurality of phase differences, for each of the plurality of light irradiation directions of the second light.

An initial image generation step includes an interference term calculation step S3, a first complex amplitude image generation step S4, and a second complex amplitude image generation step S5, and generates an initial image for performing the repeated update processing in an image update step S6 after the above steps.

In an interference term calculation step S3, the interference term calculation unit 63 obtains, for each of the plurality of light irradiation directions of the second light, an interference term by using a phase shift method based on the interference intensity image (Formula (1)) acquired by the imaging unit 50 in the case in which the phase difference $\phi$ is set to each of the plurality of phase differences.

For example, in the case in which the phase shift method of three points is used, the interference term calculation unit 63 obtains the interference term $C_n(r) = u_0^*(r) \cdot u_n(r)$ by the following Formula (2). The interference term may be obtained by $u_0(r) \cdot u_n^*(r)$. The phase shift method of four or more points may be used. The interference term $C_n(r)$ is obtained for each of the plurality of light irradiation directions of the second light (that is, for each n (= 1 to N)).

[Formula 2]

$$C_n(\mathbf{r}) = u_0^*(\mathbf{r}) \cdot u_n(\mathbf{r})$$

$$= \frac{1}{3}\left[ I_n(\mathbf{r}, 0) + I_n\left(\mathbf{r}, \frac{\pi}{3}\right)\exp\left(-i\frac{\pi}{3}\right) + I_n\left(\mathbf{r}, \frac{2\pi}{3}\right)\exp\left(-i\frac{2\pi}{3}\right) \right] \quad (2)$$

In a first complex amplitude image generation step S4, the first complex amplitude image generation unit 64 generates the complex amplitude image of the first light based on the interference term $C_n(r)$ obtained for each of the plurality of light irradiation directions of the second light. A phase of the complex amplitude $u_0(r)$ of the first light can be estimated as follows.

After a phase slope (a difference of the light incident directions) between the first light and the second light is corrected, a coherent sum $C_{sum}(r)$ of the interference terms after the above correction is obtained by the following Formula (3). In this case, the light incident direction of the first light is set to be parallel to the z axis, and further, the wavenumber vector representing the n-th light incident direction of the second light is set to $k_n$.

[Formula 3]

$$C_{sum}(\mathbf{r}) = \sum_{n=1}^{N} C_n(\mathbf{r})\exp\left(i\mathbf{k}_n \cdot \mathbf{r}\right)$$

$$= \sum_{n=1}^{N} u_0^*(\mathbf{r}) \cdot u_n(\mathbf{r})\exp\left(i\mathbf{k}_n \cdot \mathbf{r}\right) = u_0^*(\mathbf{r})\sum_{n=1}^{N} u_n(\mathbf{r})\exp\left(i\mathbf{k}_n \cdot \mathbf{r}\right) \quad (3)$$

The phase of the first factor $(u_0^*(r))$ of the rightmost side of the above Formula (3) is a component of the first light which is incident on the observation object S along the fixed light irradiation direction, and is greatly affected by the scattering because there is no optical sectioning effect. On the other hand, the phase of the second factor (sum of $u_n(r)$ $\exp(ik_n r)$) of the rightmost side of the above Formula (3) is a sum for the plurality of light incident directions, and has a relatively flat distribution because information near the focal plane is selectively extracted by the optical sectioning effect by the coherent sum.

From the above fact, the phase $\phi_0(r)$ of the complex amplitude $u_0(r)$ of the first light can be approximately represented by the phase of the coherent sum $C_{sum}(r)$ of the interference terms after the correction of the phase slope, as represented by the following Formula (4).

[Formula 4]

$$\phi_0(\mathbf{r}) = \angle u_0(\mathbf{r}) \cong -\angle \sum_{n=1}^{N} C_{sum}(\mathbf{r}) \quad (4)$$

An amplitude of the complex amplitude $u_0(r)$ of the first light can be obtained from an intensity image $|u_0(r)|^2$ which is captured by the imaging unit 50 in the case in which the observation object S is not irradiated with the second light and the observation object S is irradiated only with the first light.

For example, the observation object S can be irradiated only with the first light, by adjusting the orientation of the optic axis of each of the polarizer 314 and the half wave plate 315 in the irradiation unit 31 in the case of the observation apparatus 1A (FIG. 1), by the setting of the modulation pattern of the spatial light modulator 323 in the irradiation unit 32 in the case of the observation apparatus 1B (FIG. 2), by removing the mirror 333 in the irradiation unit 33 in the case of the observation apparatus 1C (FIG. 3), and by removing the mirror 343 in the irradiation unit 34 in the case of the observation apparatus 1D (FIG. 4).

Further, the amplitude of the complex amplitude $u_0(r)$ of the first light can also be estimated based on the interference term $C_n(r)$ as follows. An intensity sum $I_{sum}(r)$ of the interference terms $C_n(r)$ is obtained by the following Formula (5).

[Formula 5]

$$I_{sum}(\mathbf{r}) = \frac{1}{N}\sum_{n=1}^{N}\left|C_n(\mathbf{r})\right|^2$$

$$= \frac{1}{N}\sum_{n=1}^{N}\left|u_0^*(\mathbf{r})\cdot u_n(\mathbf{r})\right|^2 = \left|u_0(\mathbf{r})\right|^2 \frac{1}{N}\sum_{n=1}^{N}\left|u_n(\mathbf{r})\right|^2 \qquad (5)$$

The first factor ($|u_0(r)|^2$) of the rightmost side of the above Formula (5) is a component of the first light which is incident on the observation object S along the fixed light irradiation direction, and is greatly affected by the scattering because there is no optical sectioning effect. On the other hand, the second factor (sum of $|u_n(r)|^2$) of the rightmost side of the above Formula (5) is a sum for the plurality of light incident directions, and has a relatively uniform distribution because of the averaging of the scattered light by the optical sectioning effect by the coherent sum.

From the above fact, the amplitude $A_0(r)$ of the complex amplitude $u_0(r)$ of the first light can be approximately represented by a square root of the intensity sum $I_{sum}(r)$ of the interference terms $C_n(r)$, as represented by the following Formula (6).

[Formula 6]

$$A_0(\mathbf{r}) = \left|u_0(\mathbf{r})\right| \cong \sqrt{I_{sum}(\mathbf{r})} \qquad (6)$$

In the first complex amplitude image generation step S4, the first complex amplitude image generation unit 64 can generate the complex amplitude image $u_0(r)$ of the first light by the following Formula (7) based on the phase $\phi_0(r)$ and the amplitude $A_0(r)$ of the complex amplitude $u_0(r)$ of the first light obtained as described above.

[Formula 7]

$$u_0(\mathbf{r}) = A_0(\mathbf{r})\exp\left(\phi_0(\mathbf{r})\right) \qquad (7)$$

The optical sectioning effect is an effect capable of selectively acquiring an image on the focal plane of the objective lens in, for example, a confocal microscope or a differential interference contrast microscope. In these microscopes, selective irradiation and selective detection are realized by increasing the numerical apertures of both the incident side and the detection side, and thus, the optical sectioning effect can be realized.

In a second complex amplitude image generation step S5, the second complex amplitude image generation unit 65 can generate the complex amplitude image $u_n(r)$ of the second light of each of the plurality of light irradiation directions by the following Formula (8), based on the complex amplitude image $u_0(r)$ of the first light and the interference term $C_n(r)$. In addition, in the following Formula (8), when a denominator of the right side is 0, $u_n(r)$ becomes indeterminate, and thus, it is preferable to generate the complex amplitude image $u_n(r)$ of the second light of each of the plurality of light irradiation directions by the following Formula (9) instead of Formula (8). $\varepsilon$ is a positive small value. In the case in which it is set to $\varepsilon = 0$, Formula (9) coincides with Formula (8).

[Formula 8]

$$u_n(\mathbf{r}) = \frac{C_n(\mathbf{r})}{u_0^*(\mathbf{r})} \qquad (8)$$

[Formula 9]

$$u_n(\mathbf{r}) = \frac{C_n(\mathbf{r})\cdot u_0(\mathbf{r})}{\left|u_0(\mathbf{r})\right|^2 + \varepsilon} \qquad (9)$$

In the description of the steps S1 to S5 described above, the same processing can be performed and the same Formula can be described between the case in which the interference intensity image is captured on the focal plane A and the case in which the interference intensity image is captured on the focal plane B, and thus, the subscript of A or B is omitted. In the following description of the image update step S6, the complex amplitude image representing the wavefront on the focal plane A of the second light which is incident on the observation object S along the n-th light irradiation direction is represented by $u_{A,n}(r)$, and the complex amplitude image representing the wavefront on the focal plane B of the second light which is incident on the observation object S along the n-th light irradiation direction is represented by $u_{B,n}(r)$.

In the image update step S6, the image update unit 66, for each of the plurality of light irradiation directions, based on the complex amplitude image representing a wavefront of light obtained when a wavefront of light represented by the complex amplitude image on an arbitrary focal plane out of the two focal planes A and B is propagated to the other focal plane, updates the complex amplitude image on the other focal plane.

The image update unit 66, for each of the plurality of light irradiation directions and each of the two focal planes A and B, repeatedly performs an update process by using each of the complex amplitude images $u_{A,n}(r)$ and $u_{B,n}(r)$ generated by the second complex amplitude image generation unit 65 of the initial image generation unit 61 as an initial image, and thus, reduces noise included in the complex amplitude image. The processing contents performed by the image update unit 66 will be described later.

In a complex differential interference image generation step S7, the complex differential interference image generation unit 67 can generate a complex differential interference image $W(r)$ by the following Formula (10), based on the complex amplitude image $u_n(r)$ ($u_{A,n}(r)$ or $u_{B,n}(r)$) of the second light of each of the plurality of light irradiation directions after performing the processing by the image update unit 66. $\delta r$ represents shear. At least one of the x component $\delta x$ and the y component $\delta y$ of or is non-zero. In the case in which $\delta x \neq 0$ and $\delta y = 0$, the complex differential interference image in which the x direction is the shear direction is obtained. In the case in which $\delta x = 0$ and $\delta y \neq 0$, the complex differential interference image in which the y direction is the shear direction is obtained. In the case in which $\delta x \neq 0$ and $\delta y \neq 0$, the complex differential interference image in which a direction according to a ratio of $\delta x$ and $\delta y$ is the shear direction is obtained.

[Formula 10]

$$W(\mathbf{r}) = \sum_{n=1}^{N} \overline{u}_n(\mathbf{r}) \cdot \overline{u}_n^*(\mathbf{r} - \delta\mathbf{r})$$

$$\overline{u}_n(\mathbf{r}) = u_n(\mathbf{r}) \exp(i\mathbf{k}_n \cdot \mathbf{r}) \tag{10}$$

In a phase differential image generation step S8, the phase differential image generation unit 68 can generate a phase differential image represented by the phase of the complex differential interference image $W(r)$. In addition, in a refractive index distribution image generation step S9, the refractive index distribution image generation unit 69 can obtain a phase differential image at each position in the z axis direction (that is, a three-dimensional phase differential image) by using the Formula of free propagation of the wavefront, and further, generate a refractive index distribution image of the observation object S by performing deconvolution based on the phase differential image.

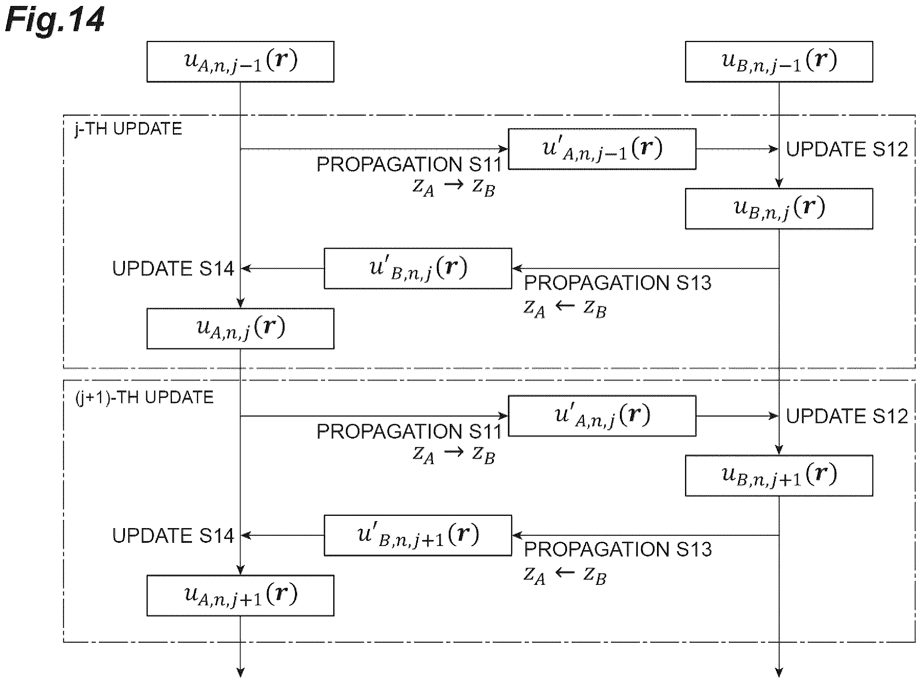

Next, the processing contents of the image update unit 66 in the image update step S6 will be described. FIG. 14 is a diagram for describing a processing flow of the image update unit 66 performed in the image update step S6. The image update unit 66 performs respective processes of a propagation step S11, an update step S12, a propagation step S13, and an update step S14 in each of the update processes which are repeatedly performed.

The complex amplitude images $u_{A,n}(r)$ and $u_{B,n}(r)$ which are generated by the second complex amplitude image generation unit 65 of the initial image generation unit 61 are represented as $u_{A,n,0}(r)$ and $u_{B,n,0}(r)$. The complex amplitude images obtained after repeatedly performing the update process j times by using $u_{A,n,0}(r)$ and $u_{B,n,0}(r)$ as the initial images are represented as $u_{A,n,j}(r)$ and $u_{B,n,j}(r)$.

In the case in which the amplitude of each of the complex amplitude images $u_{A,n,0}(r)$ and $u_{B,n,0}(r)$ generated by the second complex amplitude image generation unit 65 of the initial image generation unit 61 can be regarded as an exact solution, the image update unit 66 may perform the update process only on the phase, and thus, performs the following processing in each of the update processes.

In the propagation step S11 in the j-th update process, the image update unit 66, for each of the plurality of light irradiation directions, performs the free propagation of the wavefront of the light represented by the complex amplitude image $u_{A,n,j-1}(r)$ on the focal plane A to the focal plane B by calculation, and obtains the complex amplitude image $u'_{A,n,j-1}(r)$ representing the wavefront of the light on the focal plane B in this case.

For example, in the case in which the free propagation of the light wavefront performed from the position of $z = 0$ to the position of $z = d$ is assumed, when the complex amplitude image at the position of $z = 0$ is set to $u(x, y, 0)$, the two-dimensional Fourier transform of $u(x, y, 0)$ is set to $U(k_x, k_y, 0)$, the complex amplitude image at the position of $z = d$ is set to $u(x, y, d)$, and the two-dimensional Fourier transform of $u(x, y, d)$ is set to $U(k_x, k_y, d)$, the free propagation can be obtained by the calculation performed by the processing including the following Formula (11) and Formula (12). $k_0$ is a wavenumber of the light in the observation object.

[Formula 11]

$$U(\mathbf{k}_n, d) = U(\mathbf{k}_n, 0)\exp(i\sqrt{k_0^2 - k_x^2 - k_y^2}\,d) \tag{11}$$

[Formula 12]

$$u_n(\mathbf{r}, d) = \int U_n(\mathbf{k}_n, d)\exp(-i\mathbf{k}_n \mathbf{r})d\mathbf{k}_n \tag{12}$$

In the update step S12 in the j-th update process, the image update unit 66, for each of the plurality of light irradiation directions, updates the complex amplitude image $u_{B,n,j-1}(r)$ on the focal plane B by the following Formula (13), and obtains $u_{B,n,j}(r)$ after performing the update. $\phi'_A(r)$ in Formula (13) is a coherent sum of $u'_{A,n,j-1}(r)$ (the following Formula (14)), and $\phi_B(r)$ is a coherent sum of $u_{B,n,j-1}(r)$ (the following Formula (15)).

[Formula 13]

$$u_{B,n,j}(\mathbf{r}) = u_{B,n,j-1}(\mathbf{r})\exp\left[i\left\{\phi'_A(\mathbf{r}) - \phi_B(\mathbf{r})\right\}\right] \tag{13}$$

[Formula 14]

$$\phi'_A(\mathbf{r}) = \angle\left(\sum_{n=1}^{N} u'_{A,n,j-1}(\mathbf{r})\exp\left(i k_{A,n}\cdot\mathbf{r}\right)\right) \tag{14}$$

[Formula 15]

$$\phi_B(\mathbf{r}) = \angle\left(\sum_{n=1}^{N} u_{B,n,j-1}(\mathbf{r})\exp\left(i k_{B,n}\cdot\mathbf{r}\right)\right) \tag{15}$$

The noise included in the complex amplitude image $u_{A,n,j-1}(r)$ on the focal plane A is large, and in addition, by the optical sectioning effect, the image of the coherent sum of $u'_{A,n,j-1}(r)$ obtained when the free propagation of $u_{A,n,j-1}(r)$ is performed to the focal plane B is closer to the exact solution compared to the image of the coherent sum of the complex amplitude image $u_{B,n,j-1}(r)$ on the focal plane B. In the update step S12, by using the above fact, the complex amplitude image $u_{B,n,j-1}(r)$ on the focal plane B is updated to obtain $u_{B,n,j}(r)$ which is closer to the exact solution.

In the propagation step S13 in the j-th update process, the image update unit 66, for each of the plurality of light irradiation directions, performs the free propagation of the wavefront of the light represented by the complex amplitude image $u_{B,n,j}(r)$ on the focal plane B (the wavefront obtained in the update step S12) to the focal plane A by the calculation, and obtains the complex amplitude image $u'_{B,n,j}(r)$ representing the wavefront of the light on the focal plane A in this case.

In the update step S14 in the j-th update process, the image update unit 66, for each of the plurality of light irradiation directions, updates the complex amplitude image $u_{A,n,j-1}(r)$ on the focal plane A by the following Formula (16), and obtains $u_{A,n,j}(r)$ after performing the update. $\phi_A(r)$ in Formula (16) is a coherent sum of $u_{A,n,j-1}(r)$ (the following Formula (17)), and $\phi'_B(r)$ is a coherent sum of $u'_{B,n,j}(r)$ (the following Formula (18)).

[Formula 16]

$$u_{A,n,j}(\mathbf{r}) = u_{A,n,j-1}(\mathbf{r})\exp\left[i\left\{\phi'_B(\mathbf{r}) - \phi_A(\mathbf{r})\right\}\right] \tag{16}$$

[Formula 17]

$$\phi_A(\mathbf{r}) = \angle\left(\sum_{n=1}^{N} u_{A,n,j-1}(\mathbf{r})\exp\left(i k_{A,n}\cdot\mathbf{r}\right)\right) \tag{17}$$

[Formula 18]

$$\phi'_B(\mathbf{r}) = \angle\left(\sum_{n=1}^{N} u'_{B,n,j}(\mathbf{r})\exp\left(i\mathbf{k}_{B,n}\cdot\mathbf{r}\right)\right) \qquad (18)$$

The noise included in the complex amplitude image $u_{B,n,j}(r)$ on the focal plane B is large, and in addition, by the optical sectioning effect, the image of the coherent sum of $u'_{B,n,j}(r)$ obtained when the free propagation of $u_{B,n,j}(r)$ is performed to the focal plane A is closer to the exact solution compared to the image of the coherent sum of the complex amplitude image $u_{A,n,j-1}(r)$ on the focal plane A. In the update step S14, by using the above fact, the complex amplitude image $u_{A,n,j-1}(r)$ on the focal plane A is updated to obtain $u_{A,n,j}(r)$ which is closer to the exact solution.

The repetition of the update process by the image update unit 66 may be performed by the maximum number of times which is set in advance. Further, the repetition of the update process by the image update unit 66 may be performed until the absolute value of the difference between the value of the above Formula (14) and the value of the above Formula (15) becomes equal to or less than the predetermined value, and the absolute value of the difference between the value of the above Formula (17) and the value of the above Formula (18) becomes equal to or less than the predetermined value.

In the case in which the image update unit 66 performs the update process on both the amplitude and the phase of the complex amplitude images $u_{A,n,0}(r)$ and $u_{B,n,0}(r)$ generated by the second complex amplitude image generation unit 65 of the initial image generation unit 61, the image update unit 66 performs the following processing in each of the update processes.

In the propagation step S11 in the j-th update process, the image update unit 66, in the same manner as described above, for each of the plurality of light irradiation directions, performs the free propagation of the wavefront of the light represented by the complex amplitude image $u_{A,n,j-1}(r)$ on the focal plane A to the focal plane B by the calculation, and obtains the complex amplitude image $u'_{A,n,j-1}(r)$ representing the wavefront of the light on the focal plane B in this case.

In the update step S12 in the j-th update process, the image update unit 66, for each of the plurality of light irradiation directions, updates the complex amplitude image $u_{B,n,j-1}(r)$ on the focal plane B by the following Formula (19) instead of the above Formula (13), and obtains $u_{B,n,j}(r)$ after performing the update. $I'_A(r)$ in Formula (19) is a square root of an intensity sum of $u'_{A,n,j-1}(r)$ (the following Formula (20)), and $I_B(r)$ is a square root of an intensity sum of $u_{B,n,j-1}(r)$ (the following Formula (21)).

[Formula 19]

$$u_{B,n,j}(\mathbf{r}) = u_{B,n,j-1}(\mathbf{r})\frac{I'_A(\mathbf{r})}{I_B(\mathbf{r})}\exp\left[i\{\phi'_A(\mathbf{r})-\phi_B(\mathbf{r})\}\right] \qquad (19)$$

[Formula 20]

$$I'_A(\mathbf{r}) = \sqrt{\frac{1}{N}\sum_{n=1}^{N}\left|u'_{A,n,j-1}(\mathbf{r})\right|^2} \qquad (20)$$

[Formula 21]

$$I_B(\mathbf{r}) = \sqrt{\frac{1}{N}\sum_{n=1}^{N}\left|u_{B,n,j-1}(\mathbf{r})\right|^2} \qquad (21)$$

In the propagation step S13 in the j-th update process, the image update unit 66, in the same manner as described above, for each of the plurality of light irradiation directions, performs the free propagation of the wavefront of the light represented by the complex amplitude image $u_{B,n,j}(r)$ on the focal plane B (the wavefront obtained in the update step S12) to the focal plane A by the calculation, and obtains the complex amplitude image $u'_{B,n,j}(r)$ representing the wavefront of the light on the focal plane A in this case.

In the update step S14 in the j-th update process, the image update unit 66, for each of the plurality of light irradiation directions, updates the complex amplitude image $u_{A,n,j-1}(r)$ on the focal plane A by the following Formula (22) instead of the following Formula (16), and obtains $u_{A,n,j}(r)$ after performing the update. $I_A(r)$ in Formula (22) is a square root of an intensity sum of $u_{A,n,j-1}(r)$ (the following Formula (23)), and $I'_B(r)$ is a square root of an intensity sum of $u'_{B,n,j}(r)$ (the following Formula (24)).

[Formula 22]

$$u_{A,n,j}(\mathbf{r}) = u_{A,n,j-1}(\mathbf{r}) \frac{I'_B(\mathbf{r})}{I_A(\mathbf{r})} \exp\left[ i\{\phi'_B(\mathbf{r}) - \phi_A(\mathbf{r})\} \right] \qquad (22)$$

[Formula 23]

$$I_A(\mathbf{r}) = \sqrt{\frac{1}{N}\sum_{n=1}^{N}\left|u_{A,n,j-1}(\mathbf{r})\right|^2} \qquad (23)$$

[Formula 24]

$$I'_B(\mathbf{r}) = \sqrt{\frac{1}{N}\sum_{n=1}^{N}\left|u'_{B,n,j}(\mathbf{r})\right|^2} \qquad (24)$$

In addition, in the above Formula (19), when the value of $I_B(\mathbf{r})$ in the denominator of the right side is 0, the value of $u_{B,n,j}(\mathbf{r})$ becomes indeterminate, and thus, it is preferable to use the following Formula (25) instead of the above Formula (19). In a similar way, it is preferable to use the following Formula (26) instead of the above Formula (22). $\varepsilon$ is a positive small value. In the case in which it is set to $\varepsilon$ = 0, Formula (25) coincides with Formula (19), and Formula (26) coincides with Formula (22).

[Formula 25]

$$u_{B,n,j}(\mathbf{r}) = u_{B,n,j-1}(\mathbf{r}) \frac{I'_A(\mathbf{r}) \cdot I_B(\mathbf{r})}{\left[I_B(\mathbf{r})\right]^2 + \varepsilon} \exp\left[ i\{\phi'_A(\mathbf{r}) - \phi_B(\mathbf{r})\} \right] \qquad (25)$$

[Formula 26]

$$u_{A,n,j}(\mathbf{r}) = u_{A,n,j-1}(\mathbf{r}) \frac{I_A(\mathbf{r}) \cdot I'_B(\mathbf{r})}{\left[I_A(\mathbf{r})\right]^2 + \varepsilon} \exp\left[ i\{\phi'_B(\mathbf{r}) - \phi_A(\mathbf{r})\} \right] \qquad (26)$$

In the complex differential interference image generation step S7, the complex differential interference image generation unit 67 generates the complex differential interference image based on both or any one of the complex amplitude images $u_{A,n,J}(\mathbf{r})$ and $u_{B,n,J}(\mathbf{r})$ obtained by performing the processing by the image update unit 66. J is the number of repetitions of the update process by the image update unit 66. The complex differential interference image generation unit 67 may generate the complex differential interference image by using only one of the complex amplitude images $u_{A,n,J}(\mathbf{r})$ and $u_{B,n,J}(\mathbf{r})$.

Further, the complex differential interference image generation unit 67 may generate the complex differential interference image based on the complex amplitude image obtained by performing the free propagation of the wavefront of the light represented by the complex amplitude image $u_{A,n,J}(\mathbf{r})$ to the focal plane B by the calculation to generate the complex amplitude image $u'_{A,n,J}(\mathbf{r})$ after the propagation, and adding the above complex amplitude image $u'_{A,n,J}(\mathbf{r})$ and the complex amplitude image $u_{B,n,J}(\mathbf{r})$ for each light irradiation direction. In this case, when the interference intensity image of each of the plurality of focal planes is acquired, as illustrated in FIG. 9, the plurality of light incident directions of the second light are arranged so as to coincide with each other.

Further, the complex differential interference image generation unit 67 may generate the complex differential interference image based on the complex amplitude image obtained by performing the free propagation of the wavefront of the light represented by the complex amplitude image $u_{A,n,J}(\mathbf{r})$ to a predetermined plane (for example, an intermediate plane P set between the focal plane A and the focal plane B) by the calculation to generate the complex amplitude image $u''_{A,n,J}(\mathbf{r})$ after the propagation, and in addition, performing the free propagation of the wavefront of the light represented by the complex amplitude image $u_{B,n,J}(\mathbf{r})$ to the predetermined plane by the calculation to generate the complex amplitude image $u''_{B,n,J}(\mathbf{r})$ after the propagation, and adding the complex amplitude image $u''_{A,n,J}(\mathbf{r})$ and the complex amplitude image

$u''_{B,n,J}(r)$ obtained as described above for each light irradiation direction. In this case also, when the interference intensity image of each of the plurality of focal planes is acquired, as illustrated in FIG. 9, the plurality of light incident directions of the second light are arranged so as to coincide with each other.

The complex amplitude images $u_{A,n,J}(r)$ and $u_{B,n,J}(r)$ have the positions of the focal planes different from each other, and further, the above images have the same information with respect to the signal from the observation object, and in general, have different information with respect to the superimposed noise. Therefore, the free propagation of the light wavefronts of both or any one of the complex amplitude images $u_{A,n,J}(r)$ and $u_{B,n,J}(r)$ is performed to a common plane (for example, the focal plane A, the focal plane B, the intermediate plane P) by the calculation, and then the two complex amplitude images on the common plane are added for each light irradiation direction, and in this case, the noise can be reduced.

In the above description, the number of the focal planes for acquiring the interference intensity image is set to two. In addition, the number of the focal planes for acquiring the interference intensity image may be set to three or more. For example, in the case in which the interference intensity image is acquired on each of the three focal planes A, B, and C, and the complex amplitude image on each of the above three focal planes is updated, the image update unit 66 may perform the following processing in each of the update processes which are repeatedly performed.

The free propagation of the wavefront of the light represented by the complex amplitude image on the focal plane A is performed to the focal plane B by the calculation, and the complex amplitude image on the focal plane B is updated by using the above complex amplitude image after the propagation. Next, the free propagation of the wavefront of the light represented by the complex amplitude image on the focal plane B is performed to the focal plane C by the calculation, and the complex amplitude image on the focal plane C is updated by using the above complex amplitude image after the propagation. Next, the free propagation of the wavefront of the light represented by the complex amplitude image on the focal plane C is performed to the focal plane A by the calculation, and the complex amplitude image on the focal plane A is updated by using the above complex amplitude image after the propagation. The update process in the image update unit 66 can be performed by using the other configurations.

When the number of the focal planes for acquiring the interference intensity image is increased, the following effects are expected. That is, in the case in which the light absorption of the observation object is very large, when a region in which the absolute value is 0 in the interference term $C_n(r)$ represented by the above Formula (2) is generated, the complex amplitude image represented by the above Formula (8) or Formula (9) lacks information of the above region in which the light absorption is very large.

In the case in which the interference intensity images are acquired on the two focal planes A and B, the information of the common region may be missing in the complex amplitude images obtained respectively for the two focal planes A and B, and in addition, in the case in which the interference intensity images are acquired on the three focal planes A, B, and C, it is possible to reduce the generation frequency of the situation in which the information of the common region is missing in all of the complex amplitude images obtained respectively for the three focal planes A, B, and C. Therefore, even in the case in which the information of a certain region in the complex amplitude image of any focal plane A is missing, the missing information of the complex amplitude image of the focal plane A can be complemented by using the information of the same region of the complex amplitude image of any other focal plane B or C.

In the case in which the above complement is performed, when the interference intensity image of each of the plurality of focal planes is acquired, as illustrated in FIG. 9, it is preferable that the plurality of light incident directions of the second light are arranged so as to coincide with each other. When the number of the focal planes for acquiring the interference intensity image increases, the time required for the acquisition of the interference intensity image increases, and the time of the processing performed by the processing unit 60 also increases, and therefore, the number of the focal planes for acquiring the interference intensity image is set to at most 100, and is preferably set to 10 or less.

Next, simulation results will be described. In the simulation described below, a simulated cell mass is used as the observation object. In the present example, both the focal planes A and B are set within the observation object. The focal planes A and B are set at positions with a distance $7\lambda$ from the center position of the observation object along the direction of the optical axis of the objective lens respectively to the light irradiation side and the imaging side. $\lambda$ is a wavelength of the light.

A case in which the conventional two beam interference method is used is set as a first comparative example. A case in which the focal plane is set only at the center position of the observation object and the update process by the image update unit 66 is not performed is set as a second comparative example. The simulation is performed respectively for the case in which the update process is performed only for the phase of the complex amplitude image by the image update unit 66 in the image update step S6, and for the case in which the update process is performed for both the amplitude and the phase of the complex amplitude image.

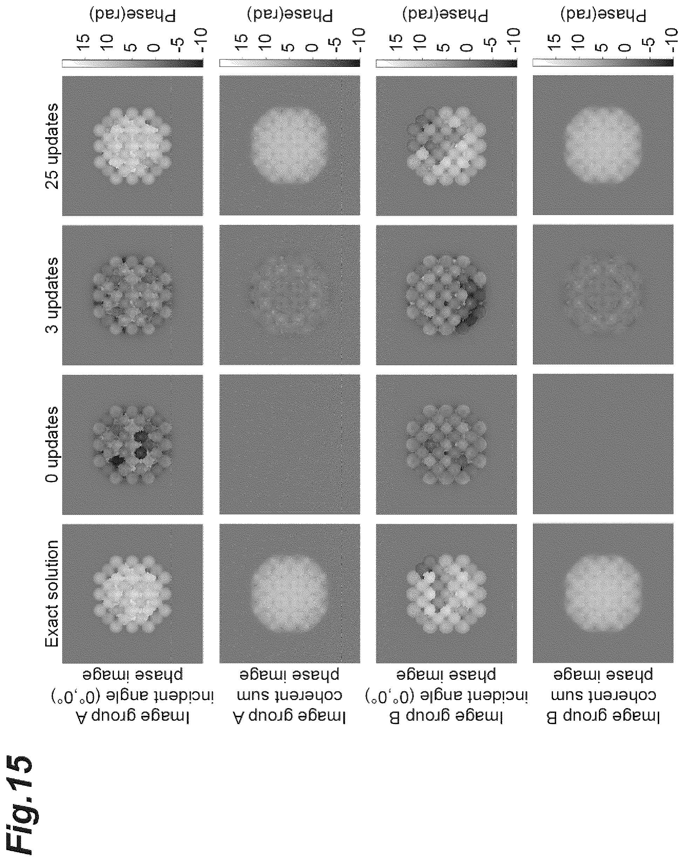

FIG. 15 to FIG. 17 are diagrams showing the simulation results in the case in which the update process is performed only for the phase of the complex amplitude image by the image update unit 66 in the image update step S6. The observation object simulating the cell mass has a refractive index distribution, and an absorption is set to be uniform.

FIG. 15 is a diagram showing the phase images of various types of the complex amplitude images. In the diagram, a first row shows the phase images of $u_{A,n}(r)$ on the focal plane A in the case in which the light irradiation direction of the second light on the observation object is set to be parallel to the optical axis of the objective lens. A second row shows the phase images of the coherent sum of $u'_{A,n}(r)$ on the focal plane B in the case in which the free propagation of $u_{A,n}(r)$ is performed to the focal plane B. A third row shows the phase images of $u_{B,n}(r)$ on the focal plane B in the case in which the light irradiation direction of the second light on the observation object is set to be parallel to the optical axis of the objective lens. A fourth row shows the phase images of the coherent sum of $u'_{B,n}(r)$ on the focal plane A in the case in which the free propagation of $u_{B,n}(r)$ is performed to the focal plane A.

Further, in the diagram, a first column of a left side shows the images of the exact solution. A second column shows the initial images without performing the update process in the image update step S6. A third column shows the images after performing three update processes in the image update step S6. A fourth column of a right side shows the images after performing twenty-five update processes in the image update step S6.

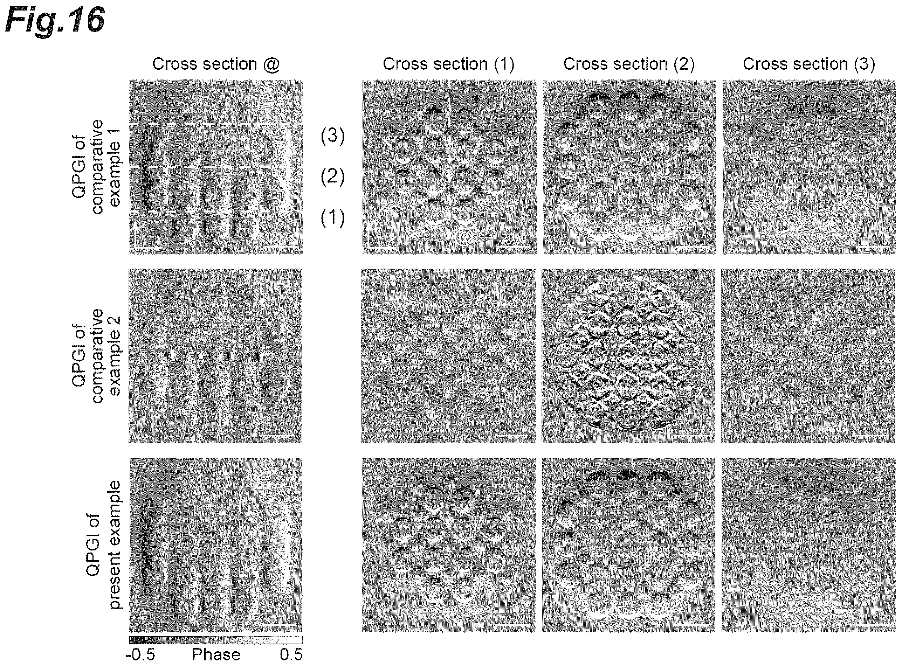

FIG. 16 is a diagram showing various types of the phase differential images. In the diagram, an upper row shows the phase differential images generated by the first comparative example, a middle row shows the phase differential images generated by the second comparative example, and a lower row shows the phase differential images generated by the present example. Further, a left side column shows the phase differential images in a cross section parallel to the z axis, and the other columns show the phase differential images in xy cross sections respectively at three positions in the z direction.

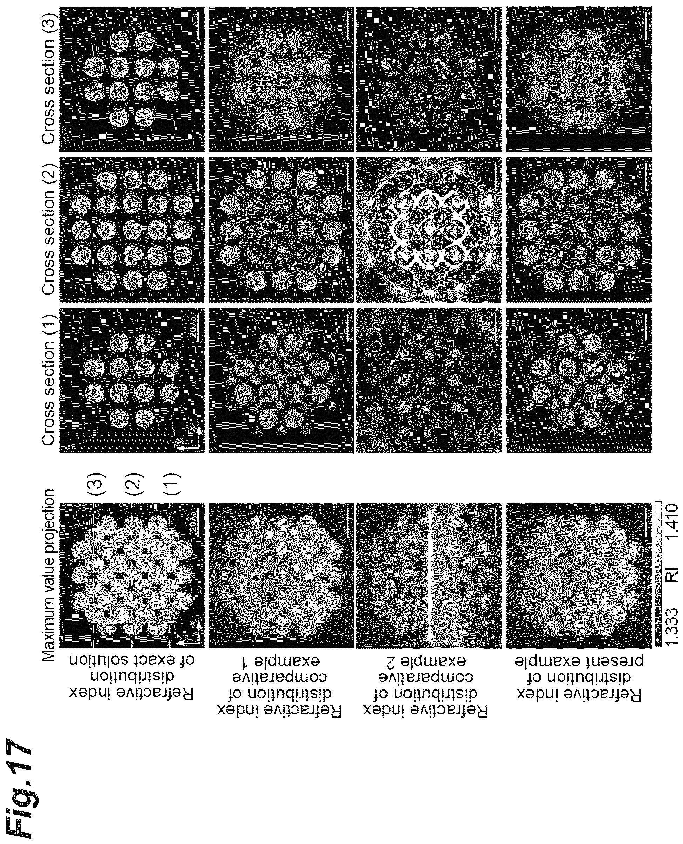

FIG. 17 is a diagram showing various types of the refractive index distribution images. In the diagram, a first row shows the refractive index distribution images of the exact solution, a second row shows the refractive index distribution images generated by the first comparative example, a third row shows the refractive index distribution images generated by the second comparative example, and a fourth row shows the refractive index distribution images generated by the present example. Further, a left side column shows maximum value projection images in the y direction, and the other columns show the refractive index distribution images in xy cross sections respectively at three positions in the z direction.

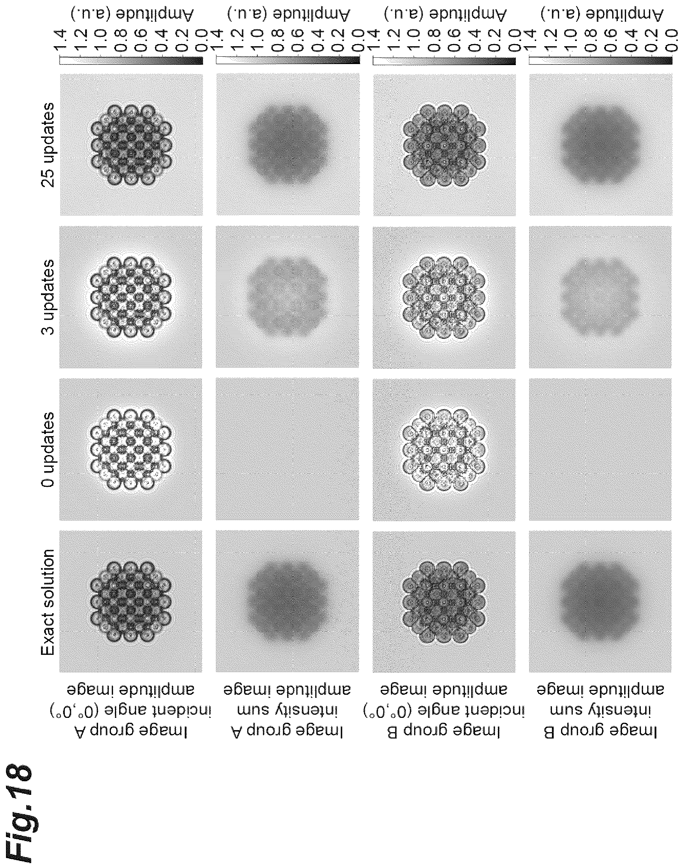

FIG. 18 to FIG. 21 are diagrams showing the simulation results in the case in which the update process is performed for both the amplitude and the phase of the complex amplitude image by the image update unit 66 in the image update step S6. The observation object simulating the cell mass has a refractive index distribution, and further, has an absorption distribution according to the refractive index distribution.

FIG. 18 is a diagram showing the amplitude images of various types of the complex amplitude images. In the diagram, a first row shows the amplitude images of $u_{A,n}(r)$ on the focal plane A in the case in which the light irradiation direction of the second light on the observation object is set to be parallel to the optical axis of the objective lens. A second row shows the amplitude images by the intensity sum of $u'_{A,n}(r)$ on the focal plane B in the case in which the free propagation of $u_{A,n}(r)$ is performed to the focal plane B. A third row shows the amplitude images of $u_{B,n}(r)$ on the focal plane B in the case in which the light irradiation direction of the second light on the observation object is set to be parallel to the optical axis of the objective lens. A fourth row shows the amplitude images by the intensity sum of $u'_{B,n}(r)$ on the focal plane A in the case in which the free propagation of $u_{B,n}(r)$ is performed to the focal plane A.

Further, in the diagram, a first column of a left side shows the images of the exact solution. A second column shows the initial images without performing the update process in the image update step S6. A third column shows the images after performing three update processes in the image update step S6. A fourth column of a right side shows the images after performing twenty-five update processes in the image update step S6.

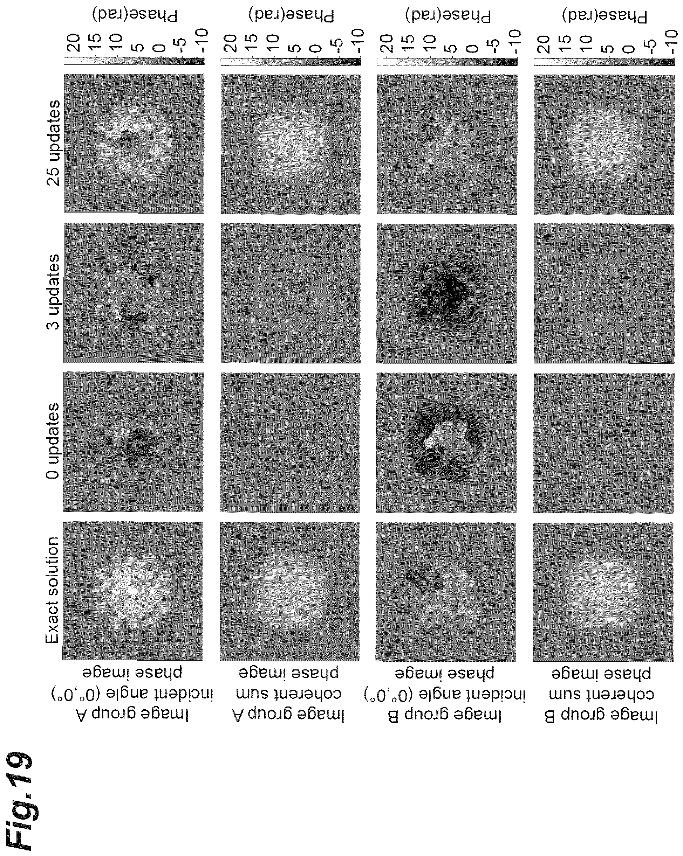

FIG. 19 is a diagram showing the phase images of various types of the complex amplitude images. In the diagram, a first row shows the phase images of $u_{A,n}(r)$ on the focal plane A in the case in which the light irradiation direction of the second light on the observation object is set to be parallel to the optical axis of the objective lens. A second row shows the phase images of the coherent sum of $u'_{A,n}(r)$ on the focal plane B in the case in which the free propagation of $u_{A,n}(r)$ is performed to the focal plane B. A third row shows the phase images of $u_{B,n}(r)$ on the focal plane B in the case in which the light irradiation direction of the second light on the observation object is set to be parallel to the optical axis of the objective lens. A fourth row shows the phase images of the coherent sum of $u'_{B,n}(r)$ on the focal plane A in the case in which the free propagation of $u_{B,n}(r)$ is performed to the focal plane A.

Further, in the diagram, a first column of a left side shows the images of the exact solution. A second column shows the initial images without performing the update process in the image update step S6. A third column shows the images after performing three update processes in the image update step S6. A fourth column of a right side shows the images after performing twenty-five update processes in the image update step S6.

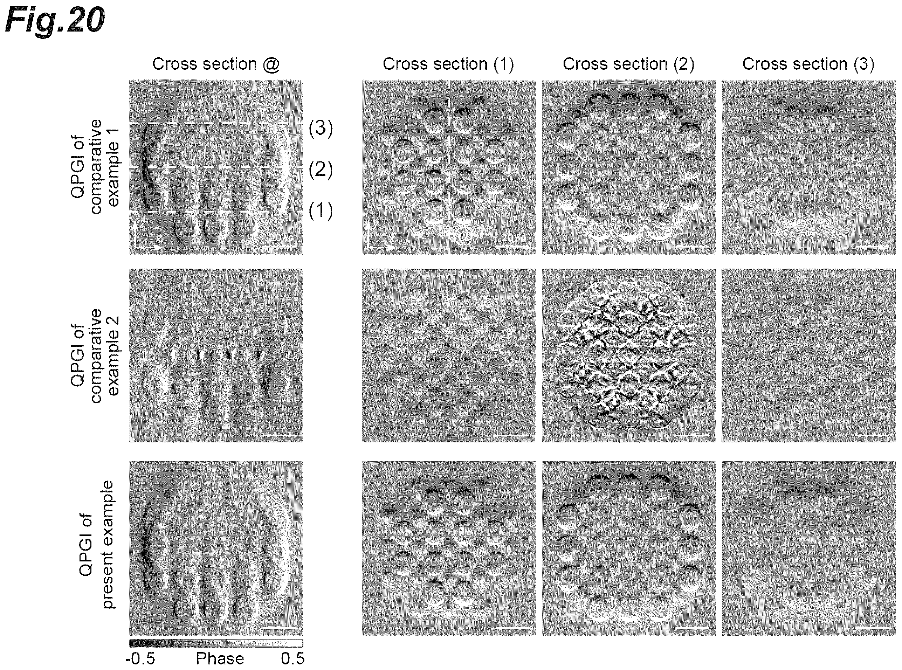

FIG. 20 is a diagram showing various types of the phase differential images. In the diagram, an upper row shows the phase differential images generated by the first comparative example, a middle row shows the phase differential images generated by the second comparative example, and a lower row shows the phase differential images generated by the present example. Further, a left side column shows the phase differential images in a cross section parallel to the z axis, and the other columns show the phase differential images in xy cross sections respectively at three positions in the z direction.

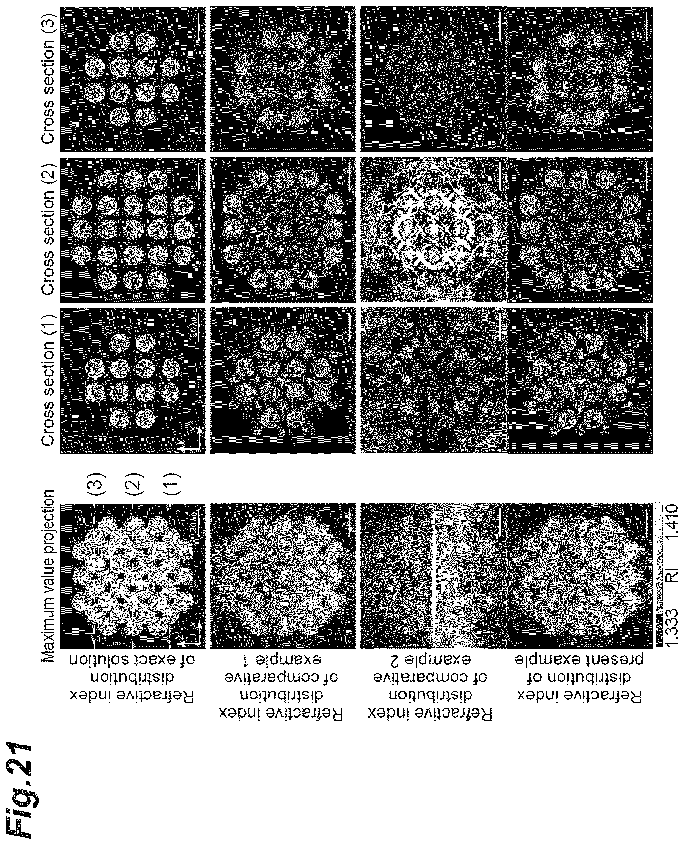

FIG. 21 is a diagram showing various types of the refractive index distribution images. In the diagram, a first row shows the refractive index distribution images of the exact solution, a second row shows the refractive index distribution images generated by the first comparative example, a third row shows the refractive index distribution images generated by the second comparative example, and a fourth row shows the refractive index distribution images generated by the present example. Further, a left side column shows maximum value projection images in the y direction, and the other columns show the refractive index distribution images in xy cross sections respectively at three positions in the z direction.

As shown in FIG. 15, FIG. 18, and FIG. 19, in the present example, the complex amplitude image of the initial image in which the number of updates is 0 is significantly different from the complex amplitude image of the exact solution, and in addition, the complex amplitude image approaches the exact solution as the number of updates increases. The complex amplitude image after performing 25 updates agrees well with the exact solution. Further, as shown in FIG. 16, FIG. 17, FIG. 20, and FIG. 21, in the present example, the phase differential image and the refractive index distribution image having a similar level of clarity as compared with the images in the first comparative example are obtained, and the phase differential image and the refractive index distribution image which are clearer as compared with the images in the second comparative example are obtained.

In the present embodiment, the first light with which the observation object is irradiated along the fixed light irradiation direction corresponds to the reference light used in the conventional two beam interference method (the first comparative example). In the conventional two beam interference method (the first comparative example), the reference light does not pass through the observation object, and the object light after passing through the observation object and the reference light are combined and received by the imaging unit. On the other hand, in the present embodiment, both the first light and the second light generated in the irradiation unit are output from the irradiation unit and received by the imaging unit through the observation object.

In the present embodiment, even in the case in which the irradiation unit includes the configuration of the interference optical system, the observation object is not disposed on the splitting optical path of the interference optical system. In the present embodiment, the splitting optical path of the interference optical system included in the irradiation unit can be made shorter than the splitting optical path in the case of the conventional two beam interference method (the first comparative example) in which the observation object is disposed on the splitting optical path. Therefore, in the present embodiment, the irradiation unit can be made small, and the observation apparatus including the above irradiation unit can also be made small. In addition, in the case in which the irradiation unit includes the configuration of the interference optical system, the interference optical system is set to a Michelson interferometer in the above embodiment, and further, the interference optical system may be set to a Mach-Zehnder interferometer.

Further, in the present embodiment, the irradiation unit can be made small, and thus, adjustment of the optical system can be easily performed, and it is also easy to shorten the optical path difference between the first light and the second light. By using the above configuration, the light source does not need to output the light of a single frequency having a long coherence length, and the degree of freedom of selection of the light source increases.

Further, in the present embodiment, the irradiation unit may have an integrated configuration. In particular, in the case in which the irradiation unit is configured to include the spatial light modulator, the relative positional relationship of the respective components (the spatial light modulator, the beam splitter, the mirror, the lens, and the like) constituting the irradiation unit can be fixed and integrated. Further, even in the configuration in which the position or the orientation of the mirror is adjusted by using the piezo actuator in the irradiation unit, the relative positional relationship of the respective components (the beam splitter, the piezo actuator, the lens, and the like) constituting the irradiation unit can be fixed and integrated. By using the integrated configuration of the irradiation unit as described above, the observation apparatus including the irradiation unit can be more easily assembled, and it is possible to more easily observe the observation object.

According to the present embodiment, it is possible to easily observe the observation object while reducing the influence of the multiple scattered light, even in the case in which the observation object is the multiple scattering object.

The effects described above can be obtained even in the case in which the update process by the image update unit 66 is not performed (the second comparative example). However, according to the findings of the present inventors, in the second comparative example, a clear image is not obtained in the case in which the focal plane is set as a plane within the observation object, and a relatively clear image is obtained in the case in which the focal plane is set as a plane located outside the observation object.

In the second comparative example, in order to set the focal plane as a plane located outside the observation object for obtaining a relatively clear image, it is necessary to set the focal plane after confirming a range in which the observation object exists. Further, in the second comparative example, in the case in which the focal plane is set outside the observation object, a region in which the interference intensity image is to be acquired on the focal plane needs to be wider than a cross sectional area of the observation object, and thus, the resolution of the image is reduced.

On the other hand, in the present embodiment, the focal plane can be easily set at an arbitrary position with respect to the observation object, and further, in the case in which the focal plane is set within the observation object, a decrease of the resolution of the image can be avoided.

The observation apparatus and the observation method are not limited to the embodiments and configuration examples described above, and various modifications are possible.

The observation apparatus of a first aspect according to the above embodiment includes (1) an initial image generation unit for generating a complex amplitude image of light on each of a plurality of focal planes when an observation object is irradiated with light along each of a plurality of light irradiation directions; and (2) an image update unit for updating, for each of the plurality of light irradiation directions, based on the complex amplitude image representing a wavefront of light obtained when a wavefront of light represented by the complex amplitude image on an arbitrary focal plane out of the plurality of focal planes is propagated to another focal plane, the complex amplitude image on the another focal plane, and (3) the image update unit repeatedly performs an update process, for each of the plurality of light irradiation directions and each of the plurality of focal planes, by using the complex amplitude image generated by the initial image generation unit as an initial image.

In the observation apparatus of a second aspect, in the configuration of the first aspect, a separation distance between the plurality of focal planes may be longer than a depth of focus based on a numerical aperture of an objective lens used for observation of the observation object.

In the observation apparatus of a third aspect, in the configuration of the first or second aspect, at least one focal plane out of the plurality of focal planes may be disposed within the observation object.

In the observation apparatus of a fourth aspect, in the configuration of any one of the first to third aspects, the observation apparatus may further include a complex differential interference image generation unit for generating a complex differential interference image based on the complex amplitude image of each of the plurality of light irradiation directions repeatedly updated by the image update unit.

In the observation apparatus of a fifth aspect, in the configuration of the fourth aspect, the observation apparatus may further include a phase differential image generation unit for generating a phase differential image based on the complex differential interference image.

In the observation apparatus of a sixth aspect, in the configuration of the fifth aspect, the observation apparatus may further include a refractive index distribution image generation unit for generating a refractive index distribution image of the observation object based on the phase differential image.

In the observation apparatus of a seventh aspect, in the configuration of any one of the first to sixth aspects, the observation apparatus may further include (1) a light source for outputting spatially coherent light; (2) an irradiation unit for generating first light and second light from the light, and irradiating the observation object with both the first light and the second light; (3) an imaging unit for receiving both the first light and the second light which irradiate the observation object and pass through the observation object, and capturing an interference intensity image generated by interference between the first light and the second light; and (4) a focal plane position setting unit for setting a position of the focal plane, and (5) the irradiation unit may irradiate the observation object with the first light along a fixed light irradiation direction, and may irradiate the observation object with the second light along each of the plurality of light irradiation directions, (6) the imaging unit may capture, for each of the plurality of light irradiation directions of the second light and each of the plurality of focal planes, the interference intensity image in a case in which a phase difference between the first light and the second light is set to each of a plurality of phase differences, and (7) the initial image generation unit may include an interference term calculation unit for obtaining, for each of the plurality of light irradiation directions of the second light and each of the plurality of focal planes, an interference term by using a phase shift method based on the interference intensity image captured by the imaging unit in the case in which the phase difference is set to each of the plurality of phase differences; a first complex amplitude image generation unit for generating, for each of the plurality of focal planes, a complex amplitude image of the first light based on the interference term obtained for each of the plurality of light irradiation directions of the second light; and a second complex amplitude image generation unit for generating, for each of the plurality of light irradiation directions of the second light and each of the plurality of focal planes, a complex amplitude image of the second light based on the complex amplitude image of the first light, and (8) the image update unit may repeatedly perform the update process by using the complex amplitude image of the second light generated for each of the plurality of light irradiation directions of the second light and each of the plurality of focal planes by the second complex amplitude image generation unit as the initial image.

In the observation apparatus of an eighth aspect, in the configuration of the seventh aspect, the irradiation unit may include a spatial light modulator for selectively performing phase modulation on, out of linearly polarized light of a first orientation and linearly polarized light of a second orientation which are orthogonal to each other, the linearly polarized light of the second orientation, and the light output from the light source may be incident on the spatial light modulator, the linearly polarized light of the first orientation out of the incident light may be set as the first light, and the linearly polarized light of the second orientation may be phase modulated by the spatial light modulator for setting the light irradiation direction and the phase difference and may be set as the second light.

In the observation apparatus of a ninth aspect, in the configuration of the seventh aspect, the irradiation unit may include a mirror and a spatial light modulator of an intensity modulation type, and the light output from the light source may be split into the first light and the second light, the first light may be reflected by the mirror, the second light may be intensity modulated by the spatial light modulator for setting the light irradiation direction and the phase difference, and the first light and the second light may be combined and output.

In the observation apparatus of a tenth aspect, in the configuration of the seventh aspect, the irradiation unit may include a first mirror and a second mirror, the light output from the light source may be split into the first light and the second light, the first light may be reflected by the first mirror, the second light may be reflected by the second mirror, and the first light and the second light may be combined and output, the light irradiation direction may be set by an orientation of a reflection surface of the second mirror, and the phase difference may be set by a position of a reflection surface of the first mirror or the second mirror.

In the observation apparatus of an eleventh aspect, in the configuration of the seventh aspect, the irradiation unit may include a first mirror and a second mirror, the light output from the light source may be split by polarization into the first light and the second light, the first light may be reflected by the first mirror, the second light may be reflected by the second mirror, and the first light and the second light may be combined by polarization and output, the light irradiation direction may be set by an orientation of a reflection surface of the second mirror, and the imaging unit may include a polarization camera capable of simultaneously performing imaging respectively for a plurality of polarized light components, and may capture a plurality of interference intensity images with phase differences different from each other by performing imaging respectively for the plurality of polarized light components.

In the observation apparatus of a twelfth aspect, in the configuration of any one of the seventh to eleventh aspects, the focal plane position setting unit may set the position of the focal plane by adjusting a position of the observation object, or by adjusting an imaging optical system provided between the observation object and the imaging unit.

In the observation apparatus of a thirteenth aspect, in the configuration of any one of the seventh to twelfth aspects, the first complex amplitude image generation unit may obtain a phase of the complex amplitude image of the first light based on a coherent sum of the interference terms obtained respectively for the plurality of light irradiation directions of the second light.

In the observation apparatus of a fourteenth aspect, in the configuration of any one of the seventh to thirteenth aspects, the first complex amplitude image generation unit may obtain an amplitude of the complex amplitude image of the first light based on an intensity image captured by the imaging unit in a case in which the observation object is irradiated only with the first light out of the first light and the second light.

In the observation apparatus of a fifteenth aspect, in the configuration of any one of the seventh to thirteenth aspects, the first complex amplitude image generation unit may obtain an amplitude of the complex amplitude image of the first light based on an intensity sum of the interference terms obtained respectively for the plurality of light irradiation directions of the second light.

The observation method of a first aspect according to the above embodiment includes (1) an initial image generation step of generating a complex amplitude image of light on each of a plurality of focal planes when an observation object is irradiated with light along each of a plurality of light irradiation directions; and (2) an image update step of updating, for each of the plurality of light irradiation directions, based on the complex amplitude image representing a wavefront of light obtained when a wavefront of light represented by the complex amplitude image on an arbitrary focal plane out of the plurality of focal planes is propagated to another focal plane, the complex amplitude image on the another focal plane, and (3) in the image update step, an update process is repeatedly performed, for each of the plurality of light irradiation directions and each of the plurality of focal planes, by using the complex amplitude image generated in the initial image generation step as an initial image.

In the observation method of a second aspect, in the configuration of the first aspect, a separation distance between the plurality of focal planes may be longer than a depth of focus based on a numerical aperture of an objective lens used for observation of the observation object.

In the observation method of a third aspect, in the configuration of the first or second aspect, at least one focal plane out of the plurality of focal planes may be disposed within the observation object.

In the observation method of a fourth aspect, in the configuration of any one of the first to third aspects, the observation method may further include a complex differential interference image generation step of generating a complex differential interference image based on the complex amplitude image of each of the plurality of light irradiation directions repeatedly updated in the image update step.

In the observation method of a fifth aspect, in the configuration of the fourth aspect, the observation method may further include a phase differential image generation step of generating a phase differential image based on the complex differential interference image.

In the observation method of a sixth aspect, in the configuration of the fifth aspect, the observation method may further include a refractive index distribution image generation step of generating a refractive index distribution image of the observation object based on the phase differential image.

The program according to the above embodiment is a program for causing a computer to execute the respective steps of the observation method of the above configuration.

The recording medium according to the above embodiment is a computer readable recording medium storing the program of the above configuration.

**Industrial Applicability**

The embodiments can be used as an observation apparatus and an observation method capable of reducing influence of multiple scattered light and easily observing an observation object even in the case in which the observation object is a multiple scattering object.

**Reference Signs List**

1A- 1G - observation apparatus, 2 - recording medium, 10 - light source, 21 - lens, 22 - light input end, 23 - optical fiber, 24 - light output end, 25 - lens, 31 - 35 - irradiation unit, 41 - objective lens, 42 - mirror, 43, 43a, 43b - lens, 44 - quarter wave plate, 45 - beam splitter, 46 - 48 - focal plane position setting unit, 49 - beam splitter, 50, 50a, 50b, 51 - imaging unit, 60 - processing unit, 61 - initial image generation unit, 63 - interference term calculation unit, 64 - first complex amplitude image generation unit, 65 - second complex amplitude image generation unit, 66 - image update unit, 67 - complex differential interference image generation unit, 68 - phase differential image generation unit, 69 - refractive index distribution image generation unit,
311 - beam splitter, 313 - spatial light modulator, 314 - polarizer, 315 - half wave plate, 316 - polarizer, 318 - lens, 319 - objective lens, 321 - beam splitter, 322 - mirror, 323 - spatial light modulator, 328 - lens, 329 - objective lens, 331- beam splitter, 332, 333 - mirror, 338 - lens, 339 - objective lens, 341 - polarization beam splitter, 342, 343 - mirror, 344 - polarizer, 345 - half wave plate, 346, 347 - quarter wave plate, 348 - lens, 349 - objective lens.

**Claims**

1.  An observation apparatus comprising:

    an initial image generation unit for generating a complex amplitude image of light on each of a plurality of focal planes when an observation object is irradiated with light along each of a plurality of light irradiation directions; and
    an image update unit for updating, for each of the plurality of light irradiation directions, based on the complex amplitude image representing a wavefront of light obtained when a wavefront of light represented by the complex amplitude image on an arbitrary focal plane out of the plurality of focal planes is propagated to another focal plane, the complex amplitude image on the another focal plane, wherein
    the image update unit repeatedly performs an update process, for each of the plurality of light irradiation directions and each of the plurality of focal planes, by using the complex amplitude image generated by the initial image generation unit as an initial image.

2.  The observation apparatus according to Claim 1, wherein a separation distance between the plurality of focal planes is longer than a depth of focus based on a numerical aperture of an objective lens used for observation of the observation object.

3.  The observation apparatus according to Claim 1 or 2, wherein at least one focal plane out of the plurality of focal planes is disposed within the observation object.

4.  The observation apparatus according to any one of Claims 1 to 3, further comprising a complex differential interference image generation unit for generating a complex differential interference image based on the complex amplitude image of each of the plurality of light irradiation directions repeatedly updated by the image update unit.

5.  The observation apparatus according to Claim 4, further comprising a phase differential image generation unit for generating a phase differential image based on the complex differential interference image.

6.  The observation apparatus according to Claim 5, further comprising a refractive index distribution image generation unit for generating a refractive index distribution image of the observation object based on the phase differential image.

7.  The observation apparatus according to any one of Claims 1 to 6, further comprising:

    a light source for outputting spatially coherent light;
    an irradiation unit for generating first light and second light from the light, and irradiating the observation object with both the first light and the second light;

an imaging unit for receiving both the first light and the second light which irradiate the observation object and pass through the observation object, and capturing an interference intensity image generated by interference between the first light and the second light; and

a focal plane position setting unit for setting a position of the focal plane, wherein

the irradiation unit irradiates the observation object with the first light along a fixed light irradiation direction, and irradiates the observation object with the second light along each of the plurality of light irradiation directions,

the imaging unit captures, for each of the plurality of light irradiation directions of the second light and each of the plurality of focal planes, the interference intensity image in a case in which a phase difference between the first light and the second light is set to each of a plurality of phase differences, and

the initial image generation unit includes:

an interference term calculation unit for obtaining, for each of the plurality of light irradiation directions of the second light and each of the plurality of focal planes, an interference term by using a phase shift method based on the interference intensity image captured by the imaging unit in the case in which the phase difference is set to each of the plurality of phase differences;

a first complex amplitude image generation unit for generating, for each of the plurality of focal planes, a complex amplitude image of the first light based on the interference term obtained for each of the plurality of light irradiation directions of the second light; and

a second complex amplitude image generation unit for generating, for each of the plurality of light irradiation directions of the second light and each of the plurality of focal planes, a complex amplitude image of the second light based on the complex amplitude image of the first light, and wherein

the image update unit repeatedly performs the update process by using the complex amplitude image of the second light generated for each of the plurality of light irradiation directions of the second light and each of the plurality of focal planes by the second complex amplitude image generation unit as the initial image.

8. The observation apparatus according to Claim 7, wherein

the irradiation unit includes a spatial light modulator for selectively performing phase modulation on, out of linearly polarized light of a first orientation and linearly polarized light of a second orientation which are orthogonal to each other, the linearly polarized light of the second orientation, and

the light output from the light source is incident on the spatial light modulator, the linearly polarized light of the first orientation out of the incident light is set as the first light, and the linearly polarized light of the second orientation is phase modulated by the spatial light modulator for setting the light irradiation direction and the phase difference and is set as the second light.

9. The observation apparatus according to Claim 7, wherein

the irradiation unit includes a mirror and a spatial light modulator of an intensity modulation type, and

the light output from the light source is split into the first light and the second light, the first light is reflected by the mirror, the second light is intensity modulated by the spatial light modulator for setting the light irradiation direction and the phase difference, and the first light and the second light are combined and output.

10. The observation apparatus according to Claim 7, wherein

the irradiation unit includes a first mirror and a second mirror,

the light output from the light source is split into the first light and the second light, the first light is reflected by the first mirror, the second light is reflected by the second mirror, and the first light and the second light are combined and output,

the light irradiation direction is set by an orientation of a reflection surface of the second mirror, and

the phase difference is set by a position of a reflection surface of the first mirror or the second mirror.

11. The observation apparatus according to Claim 7, wherein

the irradiation unit includes a first mirror and a second mirror,

the light output from the light source is split by polarization into the first light and the second light, the first light is reflected by the first mirror, the second light is reflected by the second mirror, and the first light and the second light are combined by polarization and output,

the light irradiation direction is set by an orientation of a reflection surface of the second mirror, and

the imaging unit includes a polarization camera capable of simultaneously performing imaging respectively for a plurality of polarized light components, and captures a plurality of interference intensity images with phase differences different from each other by performing imaging respectively for the plurality of polarized light components.

12. The observation apparatus according to any one of Claims 7 to 11, wherein the focal plane position setting unit sets the position of the focal plane by adjusting a position of the observation object, or by adjusting an imaging optical system provided between the observation object and the imaging unit.

13. The observation apparatus according to any one of Claims 7 to 12, wherein the first complex amplitude image generation unit obtains a phase of the complex amplitude image of the first light based on a coherent sum of the interference terms obtained respectively for the plurality of light irradiation directions of the second light.

14. The observation apparatus according to any one of Claims 7 to 13, wherein the first complex amplitude image generation unit obtains an amplitude of the complex amplitude image of the first light based on an intensity image captured by the imaging unit in a case in which the observation object is irradiated only with the first light out of the first light and the second light.

15. The observation apparatus according to any one of Claims 7 to 13, wherein the first complex amplitude image generation unit obtains an amplitude of the complex amplitude image of the first light based on an intensity sum of the interference terms obtained respectively for the plurality of light irradiation directions of the second light.

16. An observation method comprising:

an initial image generation step of generating a complex amplitude image of light on each of a plurality of focal planes when an observation object is irradiated with light along each of a plurality of light irradiation directions; and an image update step of updating, for each of the plurality of light irradiation directions, based on the complex amplitude image representing a wavefront of light obtained when a wavefront of light represented by the complex amplitude image on an arbitrary focal plane out of the plurality of focal planes is propagated to another focal plane, the complex amplitude image on the another focal plane, wherein in the image update step, an update process is repeatedly performed, for each of the plurality of light irradiation directions and each of the plurality of focal planes, by using the complex amplitude image generated in the initial image generation step as an initial image.

17. The observation method according to Claim 16, wherein a separation distance between the plurality of focal planes is longer than a depth of focus based on a numerical aperture of an objective lens used for observation of the observation object.

18. The observation method according to Claim 16 or 17, wherein at least one focal plane out of the plurality of focal planes is disposed within the observation object.

19. The observation method according to any one of Claims 16 to 18, further comprising a complex differential interference image generation step of generating a complex differential interference image based on the complex amplitude image of each of the plurality of light irradiation directions repeatedly updated in the image update step.

20. The observation method according to Claim 19, further comprising a phase differential image generation step of generating a phase differential image based on the complex differential interference image.

21. The observation method according to Claim 20, further comprising a refractive index distribution image generation step of generating a refractive index distribution image of the observation object based on the phase differential image.

22. A program for causing a computer to execute the respective steps of the observation method according to any one of Claims 16 to 21.

23. A computer readable recording medium storing the program according to Claim 22.

# Fig.1

# Fig.2

# Fig.3

# Fig.4

**Fig.5**

# Fig.6

# Fig.7

*Fig.8*

(a)

(b)

(c)

(d)

(e)

EP 4 657 135 A1

Fig.9

**Fig.10**

# Fig.11

(a)

FIRST SPLIT LIGHT $u_{A,0,in}(r)$

SECOND SPLIT LIGHT $u_{A,n,in}(r)\exp(i\phi)$

$u_{A,0}(r)+u_{A,n}(r)\exp(i\phi)$

S

$z=z_B$

$z=z_A$

FOCAL PLANE A

41

43

50

(b)

FIRST SPLIT LIGHT $u_{B,0,in}(r)$

SECOND SPLIT LIGHT $u_{B,n,in}(r)\exp(i\phi)$

$u_{B,0}(r)+u_{B,n}(r)\exp(i\phi)$

S

FOCAL PLANE B

$z=z_B$

$z=z_A$

41

43

50

EP 4 657 135 A1

# Fig.12

60

61

INITIAL IMAGE GENERATION UNIT

INTERFERENCE TERM
CALCULATION UNIT — 63

FIRST COMPLEX AMPLITUDE
IMAGE GENERATION UNIT — 64

SECOND COMPLEX AMPLITUDE
IMAGE GENERATION UNIT — 65

IMAGE UPDATE UNIT — 66

COMPLEX DIFFERENTIAL INTERFERENCE
MAGE GENERATION UNIT — 67

PHASE DIFFERENTIAL IMAGE
GENERATION UNIT — 68

REFRACTIVE INDEX DISTRIBUTION
IMAGE GENERATION UNIT — 69

# Fig.13

| IRRADIATE OBSERVATION OBJECT WITH FIRST SPLIT LIGHT ALONG FIXED LIGHT IRRADIATION DIRECTION, AND IRRADIATE OBSERVATION OBJECT WITH SECOND SPLIT LIGHT ALONG EACH OF PLURALITY OF LIGHT IRRADIATION DIRECTIONS | ~S1 |

| CAPTURE INTERFERENCE INTENSITY IMAGE WHEN PHASE DIFFERENCE BETWEEN LIGHT BEAMS IS SET TO EACH OF PLURALITY OF PHASE DIFFERENCES FOR EACH OF PLURALITY OF LIGHT IRRADIATION DIRECTIONS | ~S2 |

| CALCULATE INTERFERENCE TERM BY PHASE SHIFT METHOD BASED ON INTERFERENCE INTENSITY IMAGE OF EACH OF PLURALITY OF PHASE DIFFERENCES FOR EACH OF PLURALITY OF LIGHT IRRADIATION DIRECTIONS | ~S3 |

| GENERATE COMPLEX AMPLITUDE IMAGE OF FIRST SPLIT LIGHT | ~S4 |

| GENERATE COMPLEX AMPLITUDE IMAGE OF SECOND SPLIT LIGHT OF EACH OF PLURALITY OF LIGHT IRRADIATION DIRECTIONS | ~S5 |

| UPDATE COMPLEX AMPLITUDE IMAGE OF SECOND SPLIT LIGHT OF EACH OF PLURALITY OF LIGHT IRRADIATION DIRECTIONS | ~S6 |

| GENERATE COMPLEX DIFFERENTIAL INTERFERENCE IMAGE | ~S7 |

| GENERATE PHASE DIFFERENTIAL IMAGE | ~S8 |

| GENERATE REFRACTIVE INDEX DISTRIBUTION IMAGE | ~S9 |

## Fig.14

$u_{A,n,j-1}(\boldsymbol{r})$    $u_{B,n,j-1}(\boldsymbol{r})$

j-TH UPDATE

PROPAGATION S11
$z_A \rightarrow z_B$    $u'_{A,n,j-1}(\boldsymbol{r})$    UPDATE S12

$u_{B,n,j}(\boldsymbol{r})$

UPDATE S14    $u'_{B,n,j}(\boldsymbol{r})$    PROPAGATION S13
$z_A \leftarrow z_B$

$u_{A,n,j}(\boldsymbol{r})$

(j+1)-TH UPDATE

PROPAGATION S11
$z_A \rightarrow z_B$    $u'_{A,n,j}(\boldsymbol{r})$    UPDATE S12

$u_{B,n,j+1}(\boldsymbol{r})$

UPDATE S14    $u'_{B,n,j+1}(\boldsymbol{r})$    PROPAGATION S13
$z_A \leftarrow z_B$

$u_{A,n,j+1}(\boldsymbol{r})$

EP 4 657 135 A1

Fig.15

Fig.16

# Fig.17

Maximum value projection | Cross section (1) | Cross section (2) | Cross section (3)

Refractive index distribution of exact solution

Refractive index distribution of comparative example 1

Refractive index distribution of comparative example 2

Refractive index distribution of present example

1.333 RI 1.410

Fig.18

Fig.19

Fig.20

Fig.21

# Fig.22

## INTERNATIONAL SEARCH REPORT

| | International application No. |
|---|---|
| | **PCT/JP2023/044311** |

**A. CLASSIFICATION OF SUBJECT MATTER**

*G02B 21/36*(2006.01)i; *G01N 21/17*(2006.01)i; *G01N 21/45*(2006.01)i; *G02B 21/06*(2006.01)i
FI: G02B21/36; G01N21/17 610; G01N21/45 A; G02B21/06

According to International Patent Classification (IPC) or to both national classification and IPC

**B. FIELDS SEARCHED**

Minimum documentation searched (classification system followed by classification symbols)

G02B21/36; G01N21/17; G01N21/45; G02B21/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/054305 A1 (HAMAMATSU PHOTONICS KK) 17 March 2022 (2022-03-17) entire text, all drawings | 1-23 |
| A | JP 2017-219826 A (KOREA ADVANCED INSTITUTE OF SCIENCE AND TECHNOLOGY) 14 December 2017 (2017-12-14) entire text, all drawings | 1-23 |
| A | US 2021/0310787 A1 (CENTRE NATIONAL DE LA RECHERCHE SCIENTIFIQUE) 07 October 2021 (2021-10-07) entire text, all drawings | 1-23 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 February 2024** | **20 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

| INTERNATIONAL SEARCH REPORT | | International application No. |
|---|---|---|
| Information on patent family members | | **PCT/JP2023/044311** |

| Patent document cited in search report | | | Publication date (day/month/year) | Patent family member(s) | | | Publication date (day/month/year) |
|---|---|---|---|---|---|---|---|
| WO | 2022/054305 | A1 | 17 March 2022 | EP | 4194923 | A1 | |
| | | | | entire text, all drawings | | | |
| | | | | CN | 116194818 | A | |
| | | | | KR | 10-2023-0065276 | A | |
| JP | 2017-219826 | A | 14 December 2017 | US | 2017/0357084 | A1 | |
| | | | | entire text, all drawings | | | |
| | | | | WO | 2017/213464 | A1 | |
| | | | | EP | 3255414 | A1 | |
| | | | | KR | 10-2017-0140459 | A | |
| | | | | CN | 107490562 | A | |
| US | 2021/0310787 | A1 | 07 October 2021 | WO | 2020/016249 | A2 | |
| | | | | entire text, all drawings | | | |
| | | | | CN | 112740092 | A | |
| | | | | KR | 10-2021-0044208 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017219826 A
- US 10215697 B